# EUROPÄISCHE PATENTANMELDUNG

(11) **EP 4 822 172 A1**
(43) Veröffentlichungstag der Anmeldung: **14.10.2026**
(21) Anmeldenummer: 25189060.4
(22) Anmeldetag: 11.07.2025
(51) Int. Cl.: F03D 13/10, F03D 13/20

(54) **AUFBLASBARE SCRUTON-WENDEL UND SCRUTON-WENDEL-BEFESTIGUNGSVORRICHTUNG SOWIE DEREN VERWENDUNG, SCRUTON-WENDELVORRICHTUNG, TURMSEKTION, TURM UND WINDENERGIEANLAGE**

(30) Priorität: 10.04.2025 EP 25169655
(71) Anmelder: Wobben Properties GmbH, 26607 Aurich (DE)
(72) Erfinder: Die Erfindernennung liegt noch nicht vor
(74) Vertreter: Eisenführ Speiser

(57) **Zusammenfassung**

Scruton-Wendel (1) zur spiralförmigen Montage an einer Turmsektion (2) für einen Turm (102), insbesondere an einer Turmsektion (2) für einen Turm (102) für eine Windenergieanlage (100), umfassend: mehrere aufblasbare Störkörper (10), die sich jeweils zwischen einem ersten Störkörperende (10a) und einem von dem ersten Störkörperende (10a) verschiedenen zweiten Störkörperende (10b) mit einer Störkörperlänge entlang einer Störkörperlängsachse erstrecken, dadurch gekennzeichnet, dass die aufblasbaren Störkörper (10) in einer Reihe angeordnet sind und benachbart angeordnete Störkörper (10) über eine Verbindungsvorrichtung miteinander verbunden sind.

## Beschreibung

Die Erfindung betrifft eine aufblasbare Scruton-Wendel zur spiralförmigen Montage an einer Turmsektion für einen Turm, insbesondere an einer Turmsektion für einen Turm für eine Windenergieanlage, sowie deren Verwendung. Ferner betrifft die Erfindung eine Scruton-Wendel-Befestigungsvorrichtung zur Befestigung einer oder mehrerer aufblasbarer Scruton-Wendel/n an einer Turmsektion für einen Turm, insbesondere an einer Turmsektion für einen Turm für eine Windenergieanlage, sowie deren Verwendung. Darüber hinaus betrifft die Erfindung eine Scruton-Wendelvorrichtung, eine Turmsektion, einen Turm und eine Windenergieanlage.

Scruton-Wendeln werden eingesetzt, um windinduzierte Schwingungen an schlanken Strukturen zu reduzieren. Diese Schwingungen entstehen durch aerodynamische Effekte wie Wirbelablösung oder Querwind-Schwingungen und können langfristig zu Schäden oder sogar zum Versagen der Struktur führen.

Eine Scruton-Wendel ist eine aerodynamische Vorrichtung, die verwendet wird, um Schwingungen in Bauwerken oder technischen Strukturen zu dämpfen. Scruton-Wendeln erhöhen also die aerodynamische Dämpfung und verhindern so gefährliche Resonanzeffekte. Dies ist besonders bei Bauwerken mit geringer struktureller Dämpfung effektiv. Solche Bauwerke sind beispielsweise Antennen, Schornsteine, Brückenpylonen oder Türme. Durch die Reduzierung dieser Schwingungen verlängern Scruton-Wendeln die Lebensdauer von Bauwerken mit ansonsten geringer struktureller Dämpfung.

Der Trend hin zu immer filigraneren Bauwerkkonstruktionen, wie dies etwa bei Türmen für Windenergieanlagen der Fall ist, führt dazu, dass diese Bauwerke bei der Montage zunehmend anfälliger sind für ein oszillierendes Aufschwingen bei kritischen Windgeschwindigkeiten. Somit nimmt das Stabilitätsrisiko solcher Bauwerke zu, und ebenso steigt das Verletzungsrisiko für Monteure bei Montagearbeiten im und an dem (zu montierenden) Turm. Insofern ist ein Aufschwingen im jeden Fall zu verhindern. Wenn die Windgeschwindigkeiten eine kritische Windgeschwindigkeit erreichen, werden Montagearbeiten im und an dem Turm unterbrochen. Dies gewährleistet zwar zumindest die Sicherheit der Monteure, das Stabilitätsrisiko wird durch diese Maßnahme allerdings nicht reduziert. Hinzu führt diese Maßnahme zur Verzögerung der Montage und somit ggf. auch zur Verzögerung der Inbetriebnahme des Bauwerks, was in der Regel mit erheblichen wirtschaftlichen Nachteilen einhergeht.

Dieses Problem des Aufschwingens kann unterbunden oder zumindest minimiert werden, indem laminare Strömungen an solchen Bauwerken gestört werden.

Es sind beispielsweise Lösungen bekannt, bei denen Scruton-Wendeln fest mit einem Bauwerk mit geringer struktureller Dämpfung über dessen gesamte Lebensdauer mit dem Bauwerk verbunden sind. Für manche dieser Bauwerke kann es aber aus verschiedenen Gründen nicht in Betracht kommen, dass die Scruton-Wendel über die gesamte Lebensdauer mit dem Bauwerk verbunden sind. Dies kommt beispielsweise bei Windenergieanlagen in Betracht. Hier ist es in der Regel gewünscht, dass die Türme von Windenergieanlagen für den regulären Betrieb der Windenergieanlage keine Scruton-Wendeln aufweisen. Nach Fertigstellung der Windenergieanlage ist diese nicht mehr anfällig für kritische windinduzierte Schwingungen. Diese kritischen Schwingungen und somit der Bedarf an der Anordnung von Scruton-Wendeln an dem Turm entstehen bzw. bestehen nur während des Aufbaus des Turmes. Für die fertige Windenergieanlage sind jedoch keine Scruton-Wendeln erforderlich, so dass von einer permanenten Anordnung von Scruton-Wendeln abgesehen werden kann.

Es sind aber auch Scruton-Wendeln bekannt, die nach einer Turmmontage wieder gelöst werden können. So betrifft EP 3 604 801 A1 eine Vorrichtung zum Schutz von Windturbinentürmen gegen windinduzierte Schwingungen und Vibrationen, die insbesondere im spiralförmig angebrachten Zustand auch als Scruton-Spirale bezeichnet wird. Die Vorrichtung ist ein Windbrecher zum Reduzieren von windinduzierten Vibrationen oder Schwingungen beim Transport oder Aufstellen eines Turms oder Turmsegments von Windturbinen, aufweisend eine Unterkonstruktion, die gegen eine Oberfläche eines Turms oder Turmsegments spannbar ist und eine Auflageseite mit einer Auflagefläche zum Aufliegen auf der Oberfläche des Turms oder Turmsegments und eine der Auflageseite gegenüberliegende Außenseite aufweist, und zumindest ein Windwiderstandselement, zum Beeinflussen einer Windströmung an dem Turm oder Turmsegment, wobei das Windwiderstandselement mit der Außenseite der Unterkonstruktion in Kontakt bringbar ist und mit der Unterkonstruktion verbindbar ist.

Diese bekannte Lösung kann unter Umständen in einer Ausführungsform den Nachteil aufweisen, dass sich eine nur vergleichsweise geringe Dämpfung erzielen lässt, wenn sich der Windbrecher vergleichsweise gut an die Turmaußenseite anlegt. In einer anderen Ausführungsform kann nach der Erkenntnis der Erfinder wohl eine bessere Dämpfung erreicht werden, aufgrund eines tunnelförmigen Hohlkörpers dürfte der Windbrecher jedoch weniger optimal an der Turmaußenseite anliegen. Hinzu kommt, dass die Windbrecher über Metallösen miteinander verbunden werden, die nach der Erkenntnis der Erfinder im an den Turm angelegten Zustand an der Turmaußenseite anliegen, so dass die Metallösen die Turmaußenseite insbesondere bei der Demontage beschädigen können. Schließlich ist nach der Erkenntnis der Erfinder die Montage vergleichsweise aufwändig. Hinzu kommt nach der Erkenntnis der Erfinder, dass es aufwändig sein dürfte, die Windbrecher derart fest um den Turm zu wickeln, dass diese während dem Einsatz nicht verrutschen.

Insofern liegt der Erfindung die Aufgabe zugrunde, eine Lösung bereitzustellen, welche die genannten Nachteile überwindet, zumindest aber minimiert. Insbesondere liegt der Erfindung die Aufgabe zugrunde, eine Lösung bereitzustellen, welche einerseits eine einfache Montage und Demontage von Scruton-Wendeln an Turmsektionen von Türmen ermöglicht und andererseits die Scruton-Wendel zuverlässig an der Turmsektion anliegt.

Gemäß einem ersten Aspekt der Erfindung wird die eingangs genannte Aufgabe durch eine Scruton-Wendel nach Anspruch 1 gelöst. Die erfindungsgemäße Scruton-Wendel ist eine Scruton-Wendel zur spiralförmigen Montage an einer Turmsektion für einen Turm, insbesondere an einer Turmsektion für einen Turm für eine Windenergieanlage. Die erfindungsgemäße Scruton-Wendel ist aber auch zur spiralförmigen Montage an anderen zylinderförmigen Bauwerken geeignet.

Die erfindungsgemäße Scruton-Wendel umfasst mehrere aufblasbare Störkörper, die sich jeweils zwischen einem ersten Störkörperende und einem von dem ersten Störkörperende verschiedenen zweiten Störkörperende mit einer Störkörperlänge entlang einer Störkörperlängsachse erstrecken, wobei die aufblasbaren Störkörper in einer Reihe angeordnet sind und benachbart angeordnete Störkörper über eine Verbindungsvorrichtung miteinander verbunden sind.

Vorzugsweise ist das erste Störkörperende identisch zu dem zweiten Störkörperende ausgebildet. Alternativ kann es bevorzugt sein, dass das erste Störkörperende zu dem zweiten Störkörperende verschieden ausgebildet ist.

Vorzugsweise ist die Störkörperlänge der aufblasbaren Störkörper entlang der Störkörperlängsachse größer als eine Erstreckung orthogonal zur Störkörperlängsachse. Insbesondere ist die Störkörperlänge größer als eine Störkörperbreite und/oder eine Störkörperhöhe orthogonal zur Störkörperlängsachse. Vorzugsweise ist die Störkörperlänge größer als ein Durchmesser des Störkörpers.

Die Turmsektion erstreckt sich entlang einer Längsachse zwischen einem oberen Turmsektionsende und einem von dem oberen Turmsektionsende verschiedenen unteren Turmsektionsende. Die Turmsektion kann sich zwischen dem oberen Turmsektionsende und dem unteren Turmsektionsende mit einer Turmsektionslänge von beispielsweise mindestens 5 m, 10 m, 15 m, 20 m, 25 m oder 30 m erstrecken. Vorzugsweise erstreckt sich die Turmsektion zwischen dem oberen Turmsektionsende und dem unteren Turmsektionsende mit einer Turmsektionslänge von beispielsweise maximal 10 m, 15 m, 20 m, 25 m, 30 m, 35 m oder 40 m. Selbstverständlich können die Turmsektionen auch Turmsektionslängen aufweisen, die kleiner als 20 m sind oder größer als 40 m sind. Insbesondere können die Turmsektionen eine Turmsektionslänge von 11,5 m aufweisen.

Die Turmsektion kann üblicherweise Durchmesser von bis zu 4 m betragen. Selbstverständlich sind auch Turmsektionen mit Durchmessern von mehr als 4 m denkbar.

In der Regel umfasst ein Turm im Betriebszustand mehrere aufeinander angeordnete und miteinander befestigte Turmsektionen. Entsprechend ist ein oberes Turmsektionsende einer Turmsektion mit einem unteren Turmsektionsende einer weiteren Turmsektion verbunden. Eine Turmsektion der mehreren Turmsektionen ist mit einem Fundament des Turmes verbunden.

Im Betriebszustand erstreckt sich die Längsachse der Turmsektion im Wesentlichen in vertikaler Richtung. Während des Transportes und bevor die Turmsektion zu einem Turm verbaut werden, etwa, wenn sie (zwischen)gelagert werden, erstreckt sich die Längsachse in der Regel nicht in vertikaler Richtung. Insbesondere kann sich die Turmsektion während des Transportes oder während der Lagerung im Wesentlichen horizontal erstrecken.

Angaben wie "obere" und "untere" beziehen sich auf eine Anordnung der Turmsektion im Betriebszustand der Turmsektion. Insofern sind Angaben zu "obere" und "untere" dahingehend zu verstehen, dass ein oberes Turmsektionsende in vertikaler Richtung oberhalb eines unteren Turmsektionsendes angeordnet ist. Dies gilt, mutatis mutandis, für die Befestigungsgurte, aufblasbaren Scruton-Wendeln, usw. Es ist insoweit zu verstehen, dass bei einer auf dem Boden gelagerten Turmsektion das obere Turmsektionsende und untere Turmsektionsende auf derselben oder ähnlichen Höhe angeordnet sein können. Dies gilt, mutatis mutandis, für die Befestigungsgurte, aufblasbaren Scruton-Wendeln, usw.

Der Turm und/oder die Turmsektion ist insbesondere ein zylindrisches und/oder konisches Bauteil.

Eine Scruton-Wendel erstreckt sich zwischen einem oberen Wendelende und einem unteren Wendelende und weist mehrere miteinander verbundene oder verbindbare, aufblasbare Störkörper auf. In der Regel erstrecken sich mehrere Scruton-Wendeln jeweils zwischen einem oberen Wendelende und einem unteren Wendelende und weisen jeweils mehrere miteinander verbundene oder verbindbare, aufblasbare Störkörper auf. Vorzugsweise erstreckt sich die Scruton-Wendel oder erstrecken sich die mehreren Scruton-Wendeln im Betriebszustand spiralförmig um die Turmsektion. Vorzugsweise erstrecken sich die mehreren Scruton-Wendeln im Betriebszustand parallel zueinander. Vorzugsweise erstreckt sich die Scruton-Wendel oder erstrecken sich die mehreren Scruton-Wendeln im Betriebszustand mit mindestens einer Windung um die Turmsektion. Es kann ferner bevorzugt sein, dass sich die Scruton-Wendel oder die mehreren Scruton-Wendeln im Betriebszustand mit 1,25 Windungen, 1,5 Windungen, 1,75 Windungen, 2 Windungen oder mehr um die Turmsektion erstreckt oder erstrecken. Es kann ferner bevorzugt sein, dass sich die Scruton-Wendel oder die mehreren Scruton-Wendeln im Betriebszustand mit weniger als 1,25 Windungen um die Turmsektion erstreckt oder erstrecken.

Vorzugsweise erstreckt sich die Scruton-Wendel im Betriebszustand mit einer Steigung um die Turmsektion. Insbesondere bemisst sich die Steigung einer Scruton-Wendel analog zu einer Steigung eines Gewindes. Vorzugsweise beträgt die Steigung der Scruton-Wendel oder der mehreren Scruton-Wendeln im Betriebszustand mindestens das 1-fache, 2-fache, 3-fache, 4-fache, 5-fache, 6-fache oder mehrfache des Turmdurchmessers. Ergänzend oder alternativ beträgt die Steigung der Scruton-Wendel oder der mehreren Scruton-Wendeln im Betriebszustand maximal das 1-fache, 2-fache, 3-fache, 4-fache, 5-fache, 6-fache oder mehrfache des Turmdurchmessers. Insbesondere beträgt die Steigung der Scruton-Wendel in bevorzugter Weise das Fünffache des Turmdurchmessers. Beispielsweise beträgt die Steigung bei einem 5-fachen des Turmdurchmessers von 4 m 20 m (=5*4 m). Entsprechend wird eine Turmsektion mit einer Turmsektionslänge von 20 m im Betriebszustand genau einmal von dieser Scruton-Wendel umrundet. Entsprechend würde eine Turmsektion mit einer Turmsektionslänge von 40 m im Betriebszustand zweimal von der Scruton-Wendel umrundet werden und bei einer Turmsektionslänge von 30 m eineinhalbmal. Vorzugsweise beträgt die Steigung der Scruton-Wendel mindestens das Vierfache des Turmdurchmessers und/oder maximal das Sechsfache des Turmdurchmessers. Dies bedeutet, dass die Steigung der Scruton-Wendel bei einem Turmdurchmesser vorzugsweise mindestens 16 m (=4*4 m) und/oder maximal 24 m (=6*4 m) beträgt. Hierdurch können beispielsweise Montageungenauigkeiten aufgefangen werden.

Vorzugsweise werden drei Scruton-Wendeln je Turmsektion montiert.

Vorzugsweise werden die mehreren Scruton-Wendeln im Betriebszustand in Umfangsrichtung der Turmsektion beabstandet zueinander angeordnet. Vorzugsweise sind die mehreren Scruton-Wendeln in Umfangsrichtung äquidistant zueinander beabstandet angeordnet. Beispielsweise sind bei Turmsektionen, an denen zwei Scruton-Wendeln angeordnet sind, die Scruton-Wendeln vorzugsweise um 180° angeordnet. Insbesondere sind bei Turmsektionen, an denen zwei Scruton-Wendeln angeordnet sind, die Scruton-Wendeln in Umfangsrichtung um 180° versetzt zueinander angeordnet. Beispielsweise sind bei Turmsektionen, an denen drei Scruton-Wendeln angeordnet sind, die Scruton-Wendeln vorzugsweise um 120° angeordnet. Insbesondere sind bei Turmsektionen, an denen drei Scruton-Wendeln angeordnet sind, die Scruton-Wendeln in Umfangsrichtung um 120° versetzt zueinander angeordnet. Beispielsweise sind bei Turmsektionen, an denen vier Scruton-Wendeln angeordnet sind, die Scruton-Wendeln vorzugsweise um 90° angeordnet. Insbesondere sind bei Turmsektionen, an denen vier Scruton-Wendeln angeordnet sind, die Scruton-Wendeln in Umfangsrichtung um 90° versetzt zueinander angeordnet.

Eine Scruton-Wendel kann beispielsweise zwei aufblasbare Störkörper derselben Störkörperlänge und einen aufblasbaren Störkörper mit einer im Vergleich zu den beiden anderen aufblasbaren Störkörpern geringere Störkörperlänge aufweisen. Es könnten etwa zwei aufblasbare Störkörper einer Scruton-Wendel eine Störkörperlänge von 12,5 m aufweisen und ein dritter aufblasbarer Störkörper eine Störkörperlänge von 5 m aufweisen. Ebenso kann eine Scruton-Wendel beispielsweise zwei aufblasbare Störkörper derselben Störkörperlänge und zwei weitere aufblasbare Störkörper mit einer im Vergleich zu den beiden anderen aufblasbaren Störkörpern geringeren Störkörperlänge aufweisen. So können zwei aufblasbare Störkörper einer Scruton-Wendel eine Störkörperlänge von 12,5 m aufweisen und zwei weitere aufblasbare Störkörper der Scruton-Wendel eine Störkörperlänge von 5 m aufweisen. Im Wesentlichen hängt die Störkörperlänge der aufblasbaren Störkörper einer Scruton-Wendeln insbesondere von der Länge der Turmsektion und/oder von der angestrebten Steigung ab.

Die Durchmesser der aufblasbaren Störkörper können im aufgeblasenen Zustand beispielsweise bis zu 300 mm betragen. Selbstverständlich sind auch davon abweichende Durchmesser denkbar.

Die aufblasbaren Störkörper sind in einer Reihe angeordnet und benachbart angeordnete Störkörper sind über die Verbindungsvorrichtung miteinander verbunden. Vorzugsweise ist die Verbindungsvorrichtung mit einer oder der Außenseite der jeweiligen aufblasbaren Störkörper verbunden. Insbesondere ist die Verbindungsvorrichtung mit dem jeweiligen aufblasbaren Störkörper stoffschlüssig und/oder kraftschlüssig und oder formschlüssig verbunden. Vorzugsweise ist die Verbindungsvorrichtung mit dem jeweiligen aufblasbaren Störkörper verklebt und/oder vernäht.

Die Verbindungsvorrichtung ist vorzugsweise einteilig oder mehrteilig ausgebildet.

Die Verbindungsvorrichtung umfasst vorzugsweise eine Kette und/oder einen Gurt und/oder ein Seil und/oder einen Schnappschäkel und/oder einen Schnapphaken und/oder einen Karabinerhaken und/oder Laschen. Vorzugsweise ist oder umfasst die Verbindungsvorrichtung ein Kunststoffgewebe und/oder Stahl. Insbesondere wird die Verbindungsvorrichtung aus einem Kunststoffgewebe und/oder Stahl ausgebildet.

Vorzugsweise ist die Verbindungsvorrichtung mit dem jeweiligen aufblasbaren Störkörper über einen einzigen Verbindungsanschluss verbunden. Es kann alternativ bevorzugt sein, dass die Verbindungsvorrichtung mit dem jeweiligen aufblasbaren Störköper über mehrere Verbindungsanschlüsse verbunden ist. Insbesondere kann es bevorzugt sein, dass die Verbindungsvorrichtung mit dem jeweiligen aufblasbaren Störköper über zwei, drei vier, fünf, sechs, sieben, acht oder mehr Verbindungsanschlüsse verbunden ist. Vorzugsweise erstrecken sich die aufblasbaren Störkörper im aufgeblasenen Zustand der aufblasbaren Störkörper koaxial entlang der Störkörperlängsachse. Vorzugsweise ist die Verbindungsvorrichtung mit dem jeweiligen aufblasbaren Störkörper im aufgeblasenen Zustand der aufblasbaren Störkörper über einen einzigen Verbindungsanschluss koaxial verbunden. Ferner kann es bevorzugt sein, dass Verbindungsvorrichtung mit dem jeweiligen aufblasbaren Störkörper im aufgeblasenen Zustand der aufblasbaren Störkörper mit mehreren Verbindungsanschlüssen verbunden ist, wobei die mehreren Verbindungsanschlüsse äquidistant zur Störkörperlängsachse und/oder in Umfangsrichtung der aufblasbaren Störkörper äquidistant zueinander ausgebildet und/oder angeordnet sind.

Insbesondere kann es bevorzugt sein, dass ein erstes Paar Verbindungsanschlüsse an einem ersten Flächenabschnitt der aufblasbaren Störköper ausgebildet werden, die im Betriebszustand der Scruton-Wendel der Außenwand der Turmsektion zugewandt sind oder an der Außenwand der Turmsektion anliegen, und/oder ein zweites Paar Verbindungsanschlüsse an einem zweiten Flächenabschnitt der aufblasbaren Störköper ausgebildet werden, die im Betriebszustand der Scruton-Wendel der Außenwand der Turmsektion abgewandt sind. Insbesondere ist der zweite Flächenabschnitt gegenüberliegend zu dem ersten Flächenabschnitt ausgebildet. Vorzugsweise ist die Längserstreckung der Verbindungsvorrichtung zwischen den ersten Flächenabschnitten der benachbart angeordneten Störkörper kleiner als die Längserstreckung der Verbindungsvorrichtung zwischen den zweiten Flächenabschnitten der benachbart angeordneten Störkörper.

Es kann bevorzugt sein, dass die Verbindungsvorrichtung einen Verbindungsgurt und/oder ein Verbindungsseil, welcher/s sich von dem oberen Wendelende zum unteren Wendelende erstreckt, sowie weitere Verbindungselemente umfasst. Insbesondere kann es bevorzugt sein, dass der Verbindungsgurt und/oder das Verbindungsseil im Montagezustand der Scruton-Wendel mit einem oberen Befestigungsgurt und/oder einem unteren Befestigungsgurt befestigt ist/sind. Insbesondere ist es bevorzugt, dass der Verbindungsgurt und/oder das Verbindungsseil sich im Montagezustand der Scruton-Wendel, wie zuvor in Bezug auf die Scruton-Wendel bereits beschrieben worden ist, spiralförmig und mit der entsprechenden Windung um die Turmsektion herum erstrecken. Vorzugsweise sind die aufblasbaren Störkörper über die Verbindungselemente mit dem Verbindungsgurt und/oder dem Verbindungsseil verbunden. Hierzu kann es bevorzugt sein, dass die aufblasbaren Störkörper über mehrere Verbindungselemente, die zwischen dem ersten und zweiten Störkörperende angeordnet sind, verbunden sind. Die Verbindungselemente sind oder umfassen beispielsweise einen Schnappschäkel und/oder einen Schnapphaken und/oder einen Karabinerhaken und/oder Laschen.

Die Verbindungsvorrichtungen sind oder umfassen vorzugsweise Verbindungslaschen oder eine Kombination von Verbindungslaschen und/oder Schäkel, insbesondere Softschäkel. Vorzugsweise umfasst die Verbindungsvorrichtung zwei Verbindungslaschen, die über einen Schäkel, insbesondere einen Softschäkel, miteinander verbunden sind. Vorzugsweise ist jeweils eine der beiden Verbindungslaschen mit jeweils einem aufblasbaren Störkörper verbunden. Insbesondere umfasst die Verbindungsvorrichtung mindestens zwei Verbindungseinheiten, wobei die mindestens zwei Verbindungseinheiten jeweils zwei Verbindungslaschen aufweisen, die über einen Schäkel, insbesondere einen Softschäkel, miteinander verbunden sind. Vorzugsweise ist jeweils eine der beiden Verbindungslaschen der mindestens zwei Verbindungseinheiten mit jeweils einem aufblasbaren Störkörper verbunden, so dass die mindestens zwei Verbindungseinheiten jeweils dieselben beiden aufblasbaren Störkörper miteinander verbinden.

Insbesondere ist es vorgesehen, dass die aufblasbaren Störkörper über ein Paar Verbindungslaschen verbunden werden oder sind. Vorzugsweise sind die Verbindungslaschen eines Paars jeweils über einen Schäkel, insbesondere einen Softschäkel, miteinander verbunden. Insbesondere ist es bevorzugt, dass eine der beiden Verbindungslaschen des Paars kürzer ist als die andere der beiden Verbindungslaschen des Paars. Vorzugsweise wird die Scruton-Wendel im Betriebszustand derart an dem oberen und unteren Befestigungsgurt befestigt, dass die kürzere Verbindungslasche der beiden Verbindungslaschen des Paars der Scruton-Wendel der Außenseite des Turmsektionsendes zugewandt ist und die längere Verbindungslasche der beiden Laschen des Paars von der Außenseite des Turmsektionsendes abgewandt ist. Vorzugsweise ist die kürzere Verbindungslasche der beiden Verbindungslaschen des Paars mit den am ersten Flächenabschnitt ausgebildeten Verbindungsanschlüssen verbunden und die längere Verbindungslasche der beiden Verbindungslaschen des Paars mit den am zweiten Flächenabschnitt ausgebildeten Verbindungsanschlüssen verbunden.

Insbesondere ist es bevorzugt, dass im Montage- bzw. Betriebszustand der Scruton-Wendel der Abstand zwischen der Außenseite des Turmsektionsendes und der kürzeren Verbindungslasche der beiden Verbindungslaschen des Paars geringer ist als der Abstand zwischen der Außenseite des Turmsektionsendes und der längeren Verbindungslasche der beiden Verbindungslaschen des Paars. Somit ist in den Verbindungspunkten bzw. den Verbindungsanschlüssen zwischen den aufblasbaren Störkörpern die Orientierung vorgegeben. Dadurch wird im aufgeblasenen Zustand ein Drehen/ Rollen der aufblasbaren Störkörper am Turm bzw. an der Turmsektion und somit ebenfalls ein Verdrehen der aufblasbaren Störkörper zueinander reduziert. Dies ist insbesondere wichtig, um die Positionsstabilität der Scruton-Wendeln zu optimieren und mögliche pneumatische Verbindungsschläuche, welche die aufblasbaren Störkörper pneumatisch miteinander verbinden, nicht übermäßig zu verdrehen. Im Betriebszustand liegen die kurze Verbindungslasche vorzugsweise an der Außenseite der Turmsektion an und die lange Verbindungslasche erstreckt sich etwa mit einem Abstand zu der Außenseite der Turmsektion, der etwa dem Durchmesser des aufblasbaren Störkörpers entspricht.

Alternativ kann es bevorzugt sein, dass die aufblasbaren Störkörper über ein Paar Verbindungslaschen verbunden werden oder sind, wobei die Verbindungslaschen dieselbe Länge aufweisen. Vorzugsweise wird die Scruton-Wendel im Betriebszustand derart an dem oberen und unteren Befestigungsgurt befestigt, dass die beiden Verbindungslaschen des Paars mit demselben Abstand zur Außenseite der Turmsektion sind. Vorzugsweise ist im Betriebszustand der Abstand der Verbindungslaschen zur Außenseite der Turmsektion kleiner als die Hälfte des Durchmessers des jeweiligen aufblasbaren Störkörpers.

Die aufblasbaren Störkörper sind schlauchförmige und/oder ballonartige Körper. Die aufblasbaren Störkörper sind vorzugsweise zylinderförmig ausgebildet. Es kann bevorzugt sein, dass die aufblasbaren Störkörper einen polygonalen Querschnitt, insbesondere einen dreieckigen oder viereckigen Querschnitt, aufweisen.

Die aufblasbaren Störkörper umfassen einen Störkörperhohlraum mit einem veränderbaren Störkörperhohlraumvolumen. Die aufblasbaren Störkörper weisen in einem Leerzustand, in dem die aufblasbaren Störkörper nicht mit Luft oder einem anderen Gas(gemisch) aufgeblasen sind, als Störkörperhohlraumvolumen ein Leerzustandsvolumen auf, und in einem aufgeblasenen Zustand, in dem die aufblasbaren Störkörper mit Luft oder einem anderen Gas(gemisch) aufgeblasen sind, als Störkörperhohlraumvolumen ein Füllvolumen auf, welches größer ist als das Leerzustandsvolumen.

Die aufblasbaren Störkörper bestehen vorzugsweise aus einem faserverstärkten Kunststofftextil oder werden vorzugsweise aus einem faserverstärkten Kunststofftextil ausgebildet. Vorzugsweise sind die mehreren aufblasbaren Störkörper aus einem Kunststoffgewebe ausgebildet oder umfassen das Kunststoffgewebe.

Die aufblasbaren Störkörper können Ventile aufweisen, über die den aufblasbaren Störkörpern Luft oder ein anderes Gas(gemisch) zugeführt werden kann. Über dieselben Ventile oder auch andere Öffnungen können die aufblasbaren Störkörper entleert werden.

Vorzugsweise sind die Ventile durch eine Schutzabdeckung, welche mit dem aufblasbaren Körper verbunden ist, im Betriebszustand der Scruton-Wendel verdeckt. Insbesondere kann die Schutzabdeckung aus einem faserverstärkten Kunststofftextil oder wird vorzugsweise aus einem faserverstärkten Kunststofftextil ausgebildet. Vorzugsweise ist die Schutzabdeckung aus einem Kunststoffgewebe ausgebildet oder umfasst das Kunststoffgewebe.

Vorzugsweise ist im Betriebszustand der Scruton-Wendel ein aufblasbarer Störkörper der aufblasbaren Störkörper mit einem ersten Störkörperende und ein anderer aufblasbarer Störkörper der aufblasbaren Störkörper mit einem zweiten Störkörperende mit einem oberen und/oder unteren Befestigungsgurt verbunden.

Nach der Erkenntnis der Erfinder ermöglicht die erfindungsgemäße Scruton-Wendel eine aufwandsreduzierte Montage und Demontage. Insbesondere ermöglicht die erfindungsgemäße Scruton-Wendel nach der Erkenntnis der Erfinder ein gleichmäßiges und straffes Anliegen der Scruton-Wendeln an der jeweiligen Turmsektion. Insbesondere kann die Scruton-Wendel im demontierten Zustand platzsparend verstaut und effizient transportiert werden.

Gemäß einer bevorzugten Fortbildung ist vorgesehen, dass die Verbindungsvorrichtung eine erste Verbindungseinheit mit einer ersten Verbindungseinheiten-Länge und eine von der ersten Verbindungseinheit separate zweite Verbindungseinheit mit einer zweiten Verbindungseinheiten-Länge aufweist.

Insbesondere kann es bevorzugt sein, dass die erste Verbindungseinheiten-Länge kleiner ist als die zweite Verbindungseinheiten-Länge. Hierdurch können die erste Verbindungseinheit und die zweite Verbindungseinheit derart mit den benachbart angeordneten Störköpern verbunden werden, dass sich im Betriebszustand der Scruton-Wendel die erste Verbindungseinheit näher entlang der Außenseite der Turmsektion erstreckt als die zweite Verbindungseinheit. Alternativ kann es bevorzugt sein, dass die erste Verbindungseinheiten-Länge der zweiten Verbindungseinheiten-Länge entspricht. Hierdurch können die erste Verbindungseinheit und die zweite Verbindungseinheit derart mit den benachbart angeordneten Störköpern verbunden werden, dass sich im Betriebszustand der Scruton-Wendel die erste Verbindungseinheit die zweite Verbindungseinheit mit demselben Abstand zur Außenseite der Turmsektion erstrecken. Dies ermöglicht in vorteilhafter Weise, die Verbindungsvorrichtung auf die Abmaße der Turmsektion abzustimmen.

Die erste und/oder zweite Verbindungseinheit sind oder umfassen eine Verbindungslasche und/oder einen Schäkel, insbesondere einen Schnappschäkel, und/oder einen Karabiner und/oder ein Seil.

Ferner ist gemäß einer bevorzugten Fortbildung vorgesehen, dass die erste Verbindungseinheit mit einem ersten Flächenabschnitt der jeweiligen aufblasbaren Störkörper verbunden ist, und die zweite Verbindungseinheit mit einem zweiten Flächenabschnitt der aufblasbaren Störkörper verbunden ist, wobei sich der zweite Flächenabschnitt vorzugsweise gegenüberliegend zum ersten Flächenabschnitt erstreckt.

Vorzugsweise ist/sind der erste und/oder der zweite Flächenabschnitt ein Abschnitt der jeweiligen aufblasbaren Störkörper. Insbesondere ist/sind der erste und/oder der zweite Flächenabschnitt an oder in einem Bereich des ersten und/oder zweiten Störkörperendes ausgebildet. Vorzugsweise ist/sind der erste und/oder der zweite Flächenabschnitt ein mechanisch verstärkter Abschnitt der jeweiligen aufblasbaren Störkörper. Insbesondere der erste und/oder der zweite Flächenabschnitt im Vergleich zu anderen Abschnitten mindestens eine zusätzliche Gewebeschicht.

Die Scruton-Wendel umfasst nach einer ferner bevorzugten Ausführungsform eine Lufteinlassöffnung und/oder eine Luftauslassöffnung, wobei die Lufteinlassöffnung und/oder die Luftauslassöffnung vorzugsweise ein Rückschlagventil aufweisen. Insbesondere kann es bevorzugt sein, dass die Lufteinlassöffnung ergänzend auch als Luftauslassöffnung ausgebildet ist. Ferner kann es bevorzugt sein, dass die Scruton-Wendel ein Überdruckventil umfasst.

Vorzugsweise ist/sind die Lufteinlassöffnung und/oder die Luftauslassöffnung an oder im Bereich des ersten und/oder zweiten Störkörperendes angeordnet und/oder ausgebildet. Ferner ist es bevorzugt, dass die Lufteinlassöffnung an oder in dem Bereich des ersten Störkörperendes angeordnet und/oder ausgebildet ist und/oder die Luftauslassöffnung an oder in dem Bereich des zweiten Störkörperendes angeordnet und/oder ausgebildet ist. Alternativ kann es bevorzugt sein, dass die Lufteinlassöffnung an oder in dem Bereich des zweiten Störkörperendes angeordnet und/oder ausgebildet ist und/oder die Luftauslassöffnung an oder in dem Bereich des ersten Störkörperendes angeordnet und/oder ausgebildet ist.

Vorzugsweise ist/sind die Lufteinlassöffnung und/oder die Luftauslassöffnung in Umfangsrichtung des jeweiligen Störkörpers zwischen dem ersten und zweiten Flächenabschnitt angeordnet. Es kann bevorzugt sein, dass der Abstand der Lufteinlassöffnung und/oder der Luftauslassöffnung zu dem ersten und/oder zweiten Störkörperende dem Abstand des ersten und/oder zweiten Flächenabschnitts zu dem ersten und/oder zweiten Störkörperende entspricht. Ferner kann es bevorzugt sein, dass der Abstand der Lufteinlassöffnung und/oder der Luftauslassöffnung zu dem ersten und/oder zweiten Störkörperende größer ist als der Abstand des ersten und/oder zweiten Flächenabschnitts zu dem ersten und/oder zweiten Störkörperende. Ferner kann es bevorzugt sein, dass der Abstand der Lufteinlassöffnung und/oder der Luftauslassöffnung zu dem ersten und/oder zweiten Störkörperende kleiner ist als der Abstand des ersten und/oder zweiten Flächenabschnitts zu dem ersten und/oder zweiten Störkörperende.

Weiterhin kann es gemäß einer Fortbildung bevorzugt sein, dass die Lufteinlassöffnung und/oder die Luftauslassöffnung an einem dritten Flächenabschnitt der jeweiligen aufblasbaren Störkörper ausgebildet sind, der in Umfangsrichtung der jeweiligen aufblasbaren Störkörper zwischen dem ersten Flächenabschnitt und dem zweiten Flächenabschnitt angeordnet ist, oder an dem zweiten Flächenabschnitt oder an einem vierten Flächenabschnitt der jeweiligen aufblasbaren Störkörper, der sich gegenüberliegend zum ersten Flächenabschnitt erstreckt, ausgebildet sind.

Gemäß einer ferner bevorzugten Ausführungsform umfasst die Scruton-Wendel eine pneumatische Verbindungsleitung, welche die Luftauslassöffnung eines aufblasbaren Störkörpers mit der Lufteinlassöffnung des in Reihe benachbart angeordneten und mit der Verbindungsvorrichtung verbundenen aufblasbaren Störkörpers strömungstechnisch verbindet. Die Verbindungsleitung ist insbesondere ein Schlauch.

Dies hat insbesondere den Vorteil, dass die Störkörper nicht einzeln, sondern zusammen aufgeblasen werden können. Dies reduziert den Montageaufwand, insbesondere, wenn die Lufteinlassöffnungen und Luftauslassöffnung an schwierig zugänglichen Bereichen der Turmsektionen anliegen. Ferner ermöglicht dies ein gleichmäßigeres Straffen und Spannen der aufblasbaren Störkörper je Scruton-Wendel. Ferner kann zwischen den aufblasbaren Störkörpern Druck ausgeglichen werden, so dass sich die aufblasbaren Störkörper möglichst gleichmäßig an der Turmsektion ausformen. Schließlich ist ein schnelleres Entlüften der Scruton-Wendel möglich, wenn eine Pumpe mit der Saugseite an die Scruton-Wendel angeschlossen wird.

Ferner ist gemäß einer bevorzugten Fortbildung der Scruton-Wendel vorgesehen, dass die Lufteinlassöffnung an dem oder in dem Bereich des zweiten Störkörperendes angeordnet ist und/oder die Luftauslassöffnung an dem oder in dem Bereich des ersten Störkörperendes angeordnet ist. Dies ermöglicht in bevorzugter Weise ein einfaches pneumatisches Verbinden von mehreren Störkörpern. Dies hat den Vorteil, dass die pneumatischen Leitungen vergleichsweise kurz gehalten werden können. Somit wird die Gefahr reduziert, dass sie beschädigt werden oder an der Außenseite des Turms hängen bleiben.

Gemäß einem zweiten Aspekt der Erfindung wird die eingangs genannte Aufgabe durch eine Scruton-Wendel-Befestigungsvorrichtung nach Anspruch 9 gelöst. Die Scruton-Wendel-Befestigungsvorrichtung ist eine Scruton-Wendel-Befestigungsvorrichtung zur Befestigung einer oder mehrerer Scruton-Wendel/n an einer Turmsektion für einen Turm, insbesondere an einer Turmsektion für einen Turm für eine Windenergieanlage.

Die Scruton-Wendel-Befestigungsvorrichtung umfasst eine Gurteinheit und einen Schließmechanismus.

Die Gurteinheit erstreckt sich zwischen einem ersten Gurteinheitende und einem von dem ersten Gurteinheitenende verschiedenen zweiten Gurteinheitende mit einer Gurtlänge entlang einer Gurtlängsachse und zwischen einer Gurtinnenfläche und einer Gurtaußenfläche, wobei die Gurteinheit zur Befestigung der einen oder der mehreren Scruton-Wendeln an der Turmsektion mit der Gurtinnenfläche an der Turmsektion anliegt.

Vorzugsweise umfasst die Scruton-Wendel-Befestigungsvorrichtung Befestigungsanschlüsse zur Befestigung einer Scruton-Wendel, insbesondere zur Befestigung einer zuvor beschriebenen Scruton-Wendel. Vorzugsweise sind mehrere Befestigungsanschlüsse an der Gurteinheit ausgebildet. Insbesondere sind die Befestigungsanschlüsse als Befestigungsschlaufen ausgebildet. Vorzugsweise umfassen die Befestigungsanschlüsse Karabiner und/oder Schnapphaken und/oder Softschäkel. Insbesondere ist es bevorzugt, dass die Befestigungsanschlüsse äquidistant beabstandet an der Gurteinheit angeordnet sind. Vorzugsweise sind die Befestigungsanschlüsse an der Gurtaußenfläche befestigt.

Vorzugsweise sind die Befestigungsanschlüsse stoffschlüssig und/oder kraftschlüssig und/oder formschlüssig mit der Gurteinheit verbunden. Insbesondere sind die Befestigungsanschlüsse mit der Gurteinheit verklebt und/oder vernäht.

Der Schließmechanismus zum Befestigen der Gurteinheit an der Turmsektion ist mit der Gurteinheit verbunden, wobei der Schließmechanismus eine Ratsche ist.

Im Betriebszustand der Scruton-Wendel wird die Scruton-Wendel durch zwei Scruton-Wendel-Befestigungsvorrichtungen befestigt. Vorzugsweise wird eine der beiden Scruton-Wendel-Befestigungsvorrichtungen mit dem oberen Wendelende der Scruton-Wendel verbunden und die andere der beiden Scruton-Wendel-Befestigungsvorrichtungen wird mit dem unteren Wendelende der Scruton-Wendel verbunden. Die Scruton-Wendel-Befestigungsvorrichtungen werden auch Befestigungsgurte genannt, wobei die Scruton-Wendel-Befestigungsvorrichtung, die mit dem oberen Wendelende der Scruton-Wendel verbunden ist/wird, auch oberer Befestigungsgurt genannt wird, und die Scruton-Wendel-Befestigungsvorrichtung, die mit dem unteren Wendelende der Scruton-Wendel verbunden ist/wird, auch unterer Befestigungsgurt genannt wird.

Die Gurtlänge des oberen und/oder des unteren Befestigungsgurtes orientiert sich an dem Durchmesser der Turmsektion. Vorzugsweise weisen der obere und/oder der untere Befestigungsgurt eine Befestigungsgurtlänge von bis zu 15 m auf und eine Befestigungsgurtbreite von bis zu 50 mm auf.

Der obere Befestigungsgurt und/oder der untere Befestigungsgurt sind vorzugsweise ein Spanngurt oder umfassen einen Spanngurt.

Der obere Befestigungsgurt und/oder der untere Befestigungsgurt umfassen einen Öffnungs- und/oder Schließmechanismus. Insbesondere werden der obere Befestigungsgurt und/oder der untere Befestigungsgurt durch den Schließmechanismus an der Turmsektion befestigt. Vorzugsweise werden der obere Befestigungsgurt und/oder der untere Befestigungsgurt durch den Öffnungsmechanismus von der Turmsektion gelöst. Es kann bevorzugt sein, dass der Schließmechanismus und der Öffnungsmechanismus derselbe Mechanismus sind.

Der obere und/oder untere Befestigungsgurt umfassen vorzugsweise einen Gurt an dem mehrere Befestigungselemente, zum Beispiel Befestigungslaschen oder Befestigungsschlaufen vorgesehen sind, an denen die mehreren Scruton-Wendeln befestigt werden. Insbesondere wird über den oberen und unteren Befestigungsgurt die jeweilige Scruton-Wendel an der Turmsektion in Position gehalten. Insbesondere kann es bevorzugt sein, dass der obere und/oder untere Befestigungsgurt im Bereich der Befestigungselemente sogenannte Antirutschmanschetten aufweist, welche die Haftreibung zwischen der Außenseite der Turmsektion und dem oberen und/oder unteren Befestigungsgurt erhöhen.

Vorzugsweise entspricht die Anzahl der Befestigungselemente der Anzahl der zu befestigenden Scruton-Wendeln. Vorzugsweise weist der Gurt mehr Befestigungselemente auf als Scruton-Wendeln vorgesehen sind. Die mehreren Befestigungselemente sind vorzugsweise beabstandet, insbesondere äquidistant beabstandet, an dem Gurt angeordnet. Es ist insofern beim Befestigen der mehreren aufblasbaren Scruton-Wendeln an dem oberen Befestigungsgurt und dem unteren Befestigungsgurt vorgesehen, dass die mehreren aufblasbaren Scruton-Wendeln jeweils mit einem Befestigungselement des oberen und unteren Befestigungsgurts verbunden werden. Dies ermöglicht eine schnelle, einfache und sichere Verbindung zwischen den Scruton-Wendeln und den beiden Befestigungsgurten. Hinzu kommt, dass durch die beabstandete Anordnung der Befestigungselemente der Abstand zwischen den mehreren Scruton-Wendeln schnell und einfach in definierter Weise vorgegeben werden kann.

Insbesondere ist es vorgesehen, dass der obere und untere Befestigungsgurt baugleich sind. Insbesondere ist es bevorzugt, dass der obere und untere Befestigungsgurt beim Schritt des Befestigens des oberen und unteren Befestigungsgurtes entsprechend der erforderlichen Windungsanzahl gegeneinander verdreht angeordnet werden. Beispielsweise werden der obere und untere Befestigungsgurt bei einer Windungsanzahl von 1,5 um 180° verdreht zueinander angeordnet. Hierdurch kann in bevorzugter Weise die Steigung der Scruton-Wendeln eingestellt werden. Ergänzend wird hierdurch in bevorzugter Weise sichergestellt, dass der Öffnungs- und/oder Schließmechanismus des oberen und/oder unteren Befestigungsgurtes stets zwischen denselben Scruton-Wendeln liegt. Dies ist besonders bevorzugt, um eine leichte Demontage der Scruton-Wendeln von der Turmsektion bzw. dem Turm zu ermöglichen.

Es ist insbesondere vorgesehen, dass der obere und/oder untere Befestigungsgurt entsprechend der Anzahl der Scruton-Wendeln Befestigungselemente umfassen.

Ferner ist es bevorzugt, dass der obere und/oder untere Befestigungsgurt eine Spannvorrichtung aufweisen, so dass bei den Schritten Befestigen des oberen und unteren Befestigungsgurtes die beiden Befestigungsgurte besonders fest an der Turmsektion befestigt werden können, sodass ein Verrutschen der an der Turmsektion montierten Scruton-Wendeln verhindert wird. Dies hat den Vorteil, dass keine nachträglichen Korrekturarbeiten erforderlich sind, die ggf. sogar erneut einen Kran erfordern oder aber spezielle trainierte Industriekletterer, um die jeweiligen Befestigungsgurte sowie die Scruton-Wendeln im Nachhinein zu justieren. Ferner wird durch die Möglichkeit, die Befestigungsgurte durch die Spannvorrichtung besonders eng an die Turmsektion anzulegen, die Gefahr eines Herabrutschens der Scruton-Wendeln, was zu Beschädigungen an der Turmsektion bzw. dem Turm und ggf. zu Personenschaden führen kann, minimiert.

Vorzugsweise können der obere Befestigungsgurt und/oder der untere Befestigungsgurt durch eine Schnappverbindung gelöst werden. Insbesondere weist der Gurt des oberen und/oder unteren Befestigungsgurtes eine Schnappverbindung auf. Als Schnappverbindung kommt beispielsweise ein Schnappschäkel in Betracht. Die Schnappverbindung kann beispielsweise durch ein entsprechendes Betätigungsseil ausgelöst werden. Entsprechend kann durch Betätigung der Schnappverbindung, beispielsweise durch das Betätigungsseil, der jeweilige Befestigungsgurt geöffnet werden. Dies ist insbesondere für die Demontage der Scruton-Wendel von einer Turmsektion eines errichteten Turms hilfreich, da die Demontage über die Betätigungsseile vom Boden erfolgen kann, also keine Kräne oder sonstigen teuren Hilfsmittel für die Demontage der Scruton-Wendeln erforderlich sind. Insofern kann das Betätigungsseil durchaus eine Seillänge von bis zu 150 m oder mehr aufweisen.

Es ist insbesondere bevorzugt, dass beim Befestigen der mehreren aufblasbaren Scruton-Wendeln die Scruton-Wendeln durch entsprechende Haltegurte mit dem oberen und unteren Befestigungsgurt verbunden werden. Hierzu werden die Haltegurte vorzugsweise durch die Laschen der Scruton-Wendeln gezogen und mit den Befestigungselementen verbunden. Insbesondere ist es bevorzugt, dass die Haltegurte in der Länge variabel einstellbar sind. Beispielsweise können die Haltgurte entsprechende Spannvorrichtungen, beispielsweise Ratschen aufweisen, mit denen die Verbindung zwischen den Scruton-Wendeln und dem oberen und unteren Befestigungsgurt bei Bedarf auch nachgespannt werden kann, um die Scruton-Wendeln möglichst eng um die Turmsektion legen zu können.

Gemäß einer bevorzugten Fortbildung der Scruton-Wendel-Befestigungsvorrichtung ist vorgesehen, dass der Schließmechanismus mit der Gurteinheit an dem ersten Gurteinheitende oder im Bereich des ersten Gurteinheitendes verbunden ist.

Nach einer ferner bevorzugten Ausführungsform umfasst die Scruton-Wendel-Befestigungsvorrichtung einen Öffnungsmechanismus zum Lösen der an der Turmsektion befestigten Gurteinheit, wobei vorzugsweise der Schließmechanismus über den Öffnungsmechanismus mit der Gurteinheit verbunden ist, wobei der Öffnungsmechanismus zwischen einer Schließstellung und einer von der Schließstellung verschiedenen Entkopplungsstellung zum Lösen der an der Turmsektion befestigten Gurteinheit schaltbar ist.

Weiterhin umfasst die Scruton-Wendel-Befestigungsvorrichtung gemäß einer weiteren bevorzugten Fortbildung eine Betätigungseinheit, die mit dem Öffnungsmechanismus gekoppelt ist. Die Betätigungseinheit umfasst oder ist ein Betätigungsseil und/oder ein/en Betätigungsgurt.

Gemäß einer ferner bevorzugten Fortbildung umfasst die Scruton-Wendel-Befestigungsvorrichtung eine Sicherungsvorrichtung, wobei die Betätigungseinheit durch die Sicherungsvorrichtung in einem Sicherungszustand mit der Gurteinheit gekoppelt ist und in einem von dem Sicherungszustand verschiedenen Entriegelungszustand nicht durch die Sicherungsvorrichtung mit der Gurteinheit gekoppelt ist.

Darüber hinaus ist gemäß einer bevorzugten Ausführungsform der Scruton-Wendel-Befestigungsvorrichtung vorgesehen, dass die Sicherungsvorrichtung ein Kabelbinder ist, und/oder die Sicherungsvorrichtung ein Sicherungselement mit einer Sollbruchstelle und/oder einer Solltrennstelle ist.

Nach einer bevorzugten Fortbildung weist die Scruton-Wendel-Befestigungsvorrichtung mehrere an der Gurteinheit ausgebildete Befestigungsanschlüsse zur Befestigung einer Scruton-Wendel auf. Insbesondere weist die Scruton-Wendel-Befestigungsvorrichtung mehrere an der Gurteinheit ausgebildete Befestigungsanschlüsse zur Befestigung einer zuvor beschriebenen aufblasbaren Scruton-Wendel auf.

Gemäß einem dritten Aspekt der Erfindung wird die eingangs genannte Aufgabe durch eine Scruton-Wendelvorrichtung nach Anspruch 17 gelöst. Die Scruton-Wendelvorrichtung umfasst mehrere, vorzugsweise drei, Scruton-Wendeln gemäß dem zuvor beschriebenen ersten Aspekt der Erfindung und mehrere Scruton-Wendel-Befestigungsvorrichtungen gemäß dem zuvor beschriebenen zweiten Aspekt der Erfindung.

Gemäß einem vierten Aspekt der Erfindung wird die eingangs genannte Aufgabe durch eine Turmsektion nach Anspruch 18 gelöst. Die Turmsektion ist eine Turmsektion für einen Turm. Insbesondere ist die Turmsektion ist eine Turmsektion für einen Turm für eine Windenergieanlage. Die Turmsektion erstreckt sich entlang einer Längsachse zwischen einem oberen Turmsektionsende und einem von dem oberen Turmsektionsende verschiedenen unteren Turmsektionsende, umfassend mindestens eine gemäß dem dritten Aspekt zuvor beschriebene Scruton-Wendelvorrichtung, die sich zwischen einem oberen Wendelende und einem unteren Wendelende spiralförmig zwischen dem oberen Turmsektionsende und dem unteren Turmsektionsende erstreckt.

Gemäß einem fünften Aspekt der Erfindung wird die eingangs genannte Aufgabe durch einen Turm nach Anspruch 19 gelöst. Der Turm ist insbesondere ein Turm für eine Windenergieanlage. Der Turm umfasst eine zuvor beschriebene Turmsektion gemäß dem vierten Aspekt.

Gemäß einem sechsten Aspekt der Erfindung wird die eingangs genannte Aufgabe durch eine Windenergieanlage nach Anspruch 20 gelöst. Die Windenergieumlage umfasst eine zuvor beschriebene Turmsektion gemäß dem vierten Aspekt und/oder einen zuvor beschriebenen Turm gemäß dem fünften Aspekt.

Gemäß einem siebten Aspekt der Erfindung wird die eingangs genannte Aufgabe gemäß Anspruch 21 durch eine Verwendung einer gemäß dem ersten Aspekt beschriebenen Scruton-Wendel als Scruton-Wendel an einem zylinderförmigen Bauwerk, insbesondere an einem Turm oder einer Turmsektion, einem Schornstein, einem Antennenmast, einem Stützpfeiler einer Brücke oder einem Halteseil einer Hängebrücke, besonders bevorzugt an einem Turm oder einer Turmsektion einer Windenergieanlage, gelöst.

Gemäß einem achten Aspekt der Erfindung wird die eingangs genannte Aufgabe gemäß Anspruch 22 durch eine Verwendung einer gemäß dem zweiten Aspekt beschriebenen Scruton-Wendel-Befestigungsvorrichtung zur Befestigung einer Scruton-Wendel, insbesondere einer gemäß dem ersten Aspekt beschriebenen aufblasbaren Scruton-Wendel, als Scruton-Wendel an einem zylinderförmigen Bauwerk, insbesondere an einem Turm oder einer Turmsektion, einem Schornstein, einem Antennenmast, einem Stützpfeiler einer Brücke oder einem Halteseil einer Hängebrücke, besonders bevorzugt an einem Turm oder einer Turmsektion einer Windenergieanlage, gelöst.

Zu den Vorteilen, Ausführungsvarianten und Ausführungsdetails dieser weiteren Aspekte der Erfindung und ihrer Fortbildungen wird auch auf die vorangegangene Beschreibung zu den entsprechenden Merkmalen der jeweils anderen Aspekte, insbesondere der aufblasbaren Scruton-Wendel des ersten Aspekts und der Scruton-Wendel-Befestigungsvorrichtung des zweiten Aspekts verwiesen.

Ausführungsformen der Erfindung werden nun nachfolgend anhand der Zeichnungen beschrieben. Diese sollen die Ausführungsformen nicht notwendigerweise maßstäblich darstellen, vielmehr sind die Zeichnungen, wenn dies zur Erläuterung dienlich ist, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnungen; diese zeigen in:
- Fig. 1:: eine schematische, dreidimensionale Ansicht einer beispielhaften Ausführungsform einer Windenergieanlage;
- Fig. 2:: eine schematische, dreidimensionale Ansicht einer beispielhaften Ausführungsform eines Turms der in Figur 1 gezeigten Windenergieanlage;
- Fig. 3:: eine schematische, zweidimensionale Ansicht einer beispielhaften Ausführungsform einer Turmsektion des in Figur 2 gezeigten Turms mit drei Scruton-Wendeln;
- Fig. 4a,b:: zwei schematische Schnittansichten in der Draufsicht des in Figur 3 gezeigten Ausführungsbeispiels einer Turmsektion;
- Fig. 5:: eine schematische zweidimensionale Ansicht einer beispielhaften Ausführungsform einer Scruton-Wendel;
- Fig. 6a-d:: verschiedene schematische Ansichten einer beispielhaften Ausführungsform eines aufblasbaren Störkörpers einer Scruton-Wendel;
- Fig. 7:: eine schematische dreidimensionale Teilansicht einer weiteren beispielhaften Ausführungsform einer Scruton-Wendel;
- Fig. 8:: eine schematische Ansicht einer beispielhaften Ausführungsform einer Scruton-Wendel-Befestigungsvorrichtung;
- Fig. 9:: eine schematische Teilansicht der in Figur 8 gezeigten Scruton-Wendel-Befestigungsvorrichtung gemäß einer möglichen Ausführungsform;
- Fig. 10:: eine schematische Ansicht eines Ausführungsbeispiels eines Demontagegehänges;
- Fig. 11:: ein schematisches Blockdiagramm eines Ausführungsbeispiels eines Montageverfahrens; und
- Fig. 12:: ein schematisches Blockdiagramm eines Ausführungsbeispiels eines Demontageverfahrens.

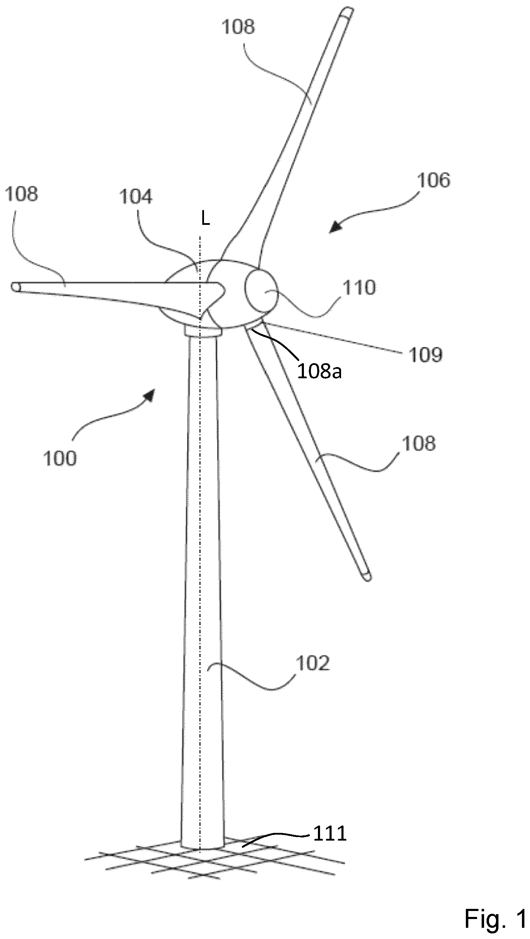

Figur 1 zeigt eine schematische, dreidimensionale Ansicht einer beispielhaften Ausführungsform einer Windenergieanlage. Figur 1 zeigt insbesondere eine Windenergieanlage 100 mit einem Turm 102 und einer Gondel 104. An der Gondel 104 ist ein aerodynamischer Rotor 106 mit drei Rotorblättern 108 und einem Spinner 110 angeordnet. Der aerodynamische Rotor 106 wird im Betrieb durch den Wind in eine Drehbewegung versetzt und treibt dadurch einen Generator, insbesondere einen Rotor des Generators, an. Der Turm 102 der Windenergieanlage 100 erstreckt sich ausgehend von einem Fundament 111 entlang einer Längsachse L in Richtung der Gondel 104.

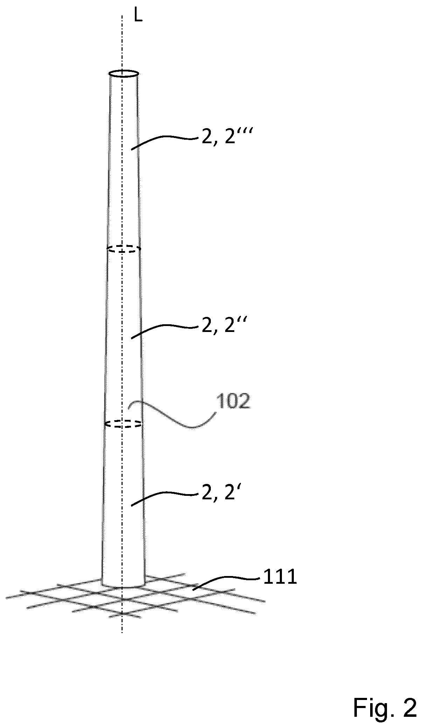

Figur 2 zeigt eine schematische dreidimensionale Ansicht einer beispielhaften Ausführungsform des Turms 102 der in Figur 1 gezeigten Windenergieanlage 100 im Betriebszustand, so dass sich der Turm 102 im Wesentlichen vertikal entlang der Längsachse L erstreckt. Der Turm 102 umfasst in diesem Ausführungsbeispiel drei Turmsektionen 2, 2', 2", 2"'. Die drei Turmsektionen 2, 2', 2", 2‴sind aufeinander angeordnet und miteinander befestigt (nicht dargestellt). So erstreckt sich eine erste Turmsektion 2' ausgehend von dem Fundament 111. Auf dieser Turmsektion 2 ist eine weitere, eine zweite Turmsektion 2" angeordnet, auf der wiederum eine dritte Turmsektion 2‴ angeordnet ist. Insofern ist die dritte Turmsektion 2‴ im Betriebszustand oberhalb der ersten und zweiten Turmsektion 2', 2" angeordnet und die zweite Turmsektion 2" ist im Betriebszustand oberhalb der ersten Turmsektion 2' angeordnet.

Jede der Turmsektionen erstreckt sich zwischen einem oberen Turmsektionsende 2a und einem unteren Turmsektionsende 2b, welches von dem oberen Turmsektionsende 2a verschieden ist. Insofern ist die erste Turmsektion 2' mit dem unteren Turmsektionsende 2b an dem Fundament befestigt und mit dem oberen Turmsektionsende 2a mit dem unteren Turmsektionsende 2b der zweiten Turmsektion 2" verbunden. Die zweite Turmsektion 2" ist mit dem oberen Turmsektionsende 2a wiederum mit dem unteren Turmsektionsende 2b der dritten Turmsektion 2‴ verbunden.

In dem in Figur 2 schematisch dargestellten Ausführungsbeispiel ist der Turm 102 leicht konisch. Es ist zu verstehen, dass der Turm stattdessen auch zylinderförmig ausgebildet sein könnte.

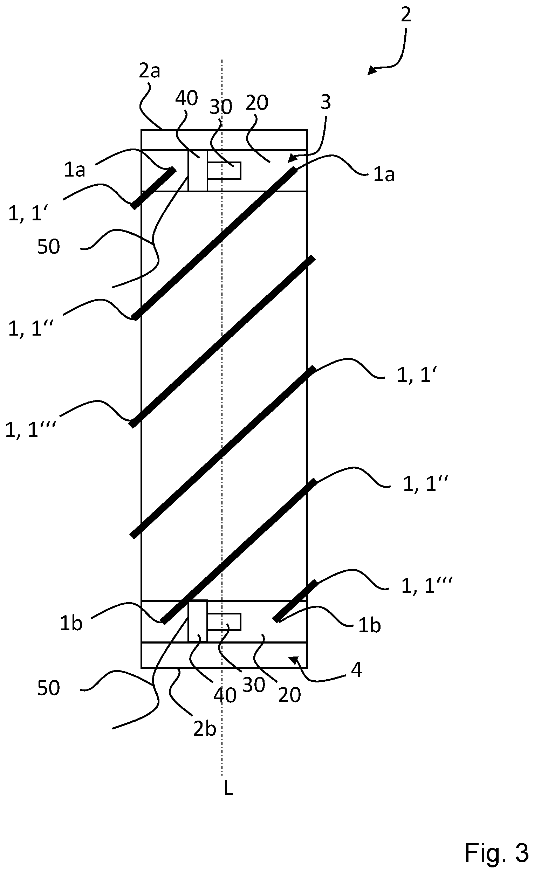

Figur 3 zeigt eine schematische, zweidimensionale Ansicht einer beispielhaften Ausführungsform einer Turmsektion2 des in Figur 2 gezeigten Turms 102 mit drei Scruton-Wendeln 1, 1', 1", 1‴. Die drei Scruton-Wendeln 1, 1', 1", 1‴ sind im Bereich des oberen Turmsektionsendes 2a jeweils mit dem oberen Wendelende 1a an der Turmsektion 2 befestigt und im Bereich des unteren Turmsektionsendes 2a jeweils mit dem unteren Wendelende 1a an der Turmsektion 2 befestigt. Zur Befestigung der Scruton-Wendeln an der Turmsektion 2 ist im Bereich des oberen Turmsektionsendes 2a ein oberer Befestigungsgurt 3 befestigt und im Bereich des unteren Turmsektionsendes 2b ein unterer Befestigungsgurt 4 befestigt. Die drei Scruton-Wendeln sind hierbei derart angeordnet, dass sie die Turmsektion 2 spiralförmig mit etwa 1,3 Windungen umschließen.

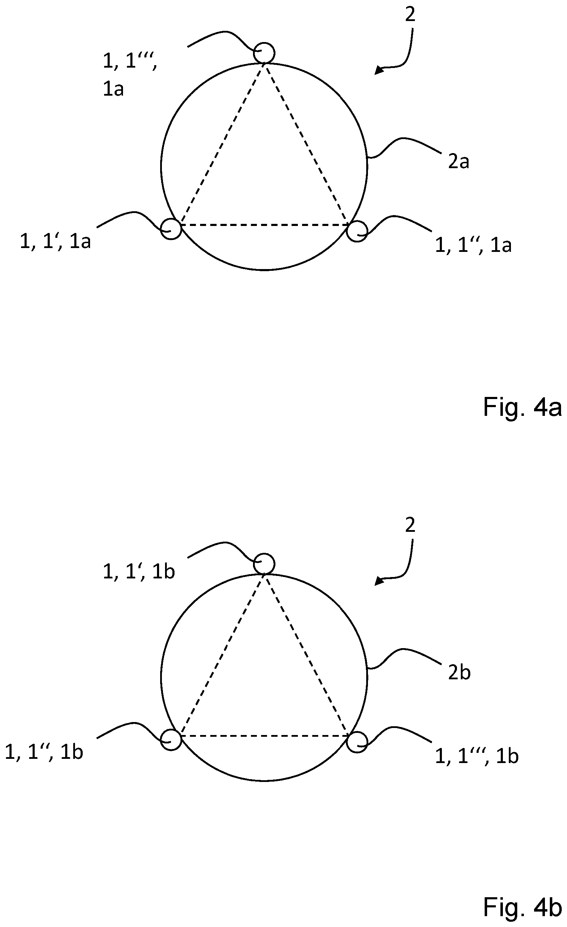

Die Figuren 4a,b zeigen zwei schematische Schnittansichten in der Draufsicht des in Figur 3 gezeigten Ausführungsbeispiels der Turmsektion 2. Die in Figur 4a gezeigte Schnittansicht zeigt den Schnitt im Bereich der oberen Wendelenden 1a bzw. im Bereich des oberen Turmsektionsendes 2a. Die in Figur 4b gezeigte Schnittansicht zeigt den Schnitt im Bereich der unteren Wendelenden 1b bzw. im Bereich des unteren Turmsektionsendes 2b.

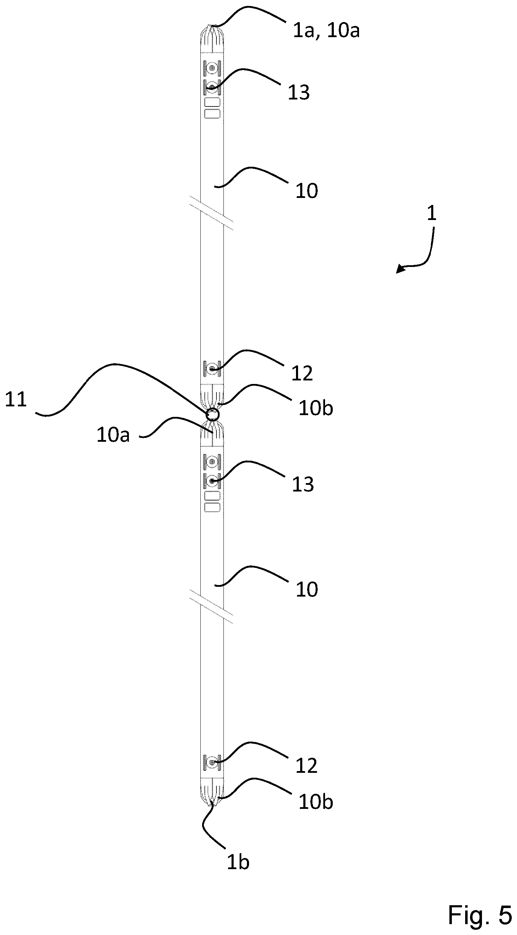

Figur 5 zeigt eine schematische zweidimensionale Ansicht einer beispielhaften Ausführungsform einer Scruton-Wendel 1, wie sie beispielsweise in dem in Figur 3 gezeigten schematisch dargestellt ist. Die Scruton-Wendel 1 erstreckt sich zwischen einem oberen Wendelende 1a und einem unteren Wendelende 1b. Die Scruton-Wendel 1 weist in diesem Ausführungsbeispiel 2 zwei miteinander verbundene, aufblasbare Störkörper 10 auf.

Die aufblasbaren Störkörper 10 erstrecken sich jeweils zwischen einem ersten Störkörperende 10a und einem von dem ersten Störkörperende 10a verschiedenen zweiten Störkörperende 10b mit derselben Störkörperlänge. Die aufblasbaren Störkörper 10 sind über entsprechende Verbindungsvorrichtungen 11 miteinander verbunden und zwar an dem ersten Störkörperende 10a des einen aufblasbaren Störkörpers 10 mit dem zweiten Störkörperende 10b des anderen aufblasbaren Störkörpers 10. Die Verbindungsvorrichtungen 11 sind vorzugsweise Verbindungslaschen.

Die aufblasbaren Störkörper 10 sind schlauchförmig ausgebildet. Die aufblasbaren Störkörper 10 umfassen einen Störkörperhohlraum mit einem veränderbaren Störkörperhohlraumvolumen. Die aufblasbaren Störkörper 10 weisen in einem Leerzustand, in dem die aufblasbaren Störkörper nicht mit Luft oder einem anderen Gas(gemisch) aufgeblasen sind, als Störkörperhohlraumvolumen ein Leerzustandsvolumen auf, und in einem aufgeblasenen Zustand, in dem die aufblasbaren Störkörper mit Luft oder einem anderen Gas(gemisch) aufgeblasen sind, als Störkörperhohlraumvolumen ein Füllvolumen auf, welches größer ist als das Leerzustandsvolumen.

Die aufblasbaren Störkörper 10 werden aus einem faserverstärkten Kunststofftextil ausgebildet.

Die aufblasbaren Störkörper weisen Ventile 12 aufweisen, über die den aufblasbaren Störkörpern 10 Luft zugeführt werden kann. Über dieselben andere Öffnungen 13 können die aufblasbaren Störkörper 10 entleert werden.

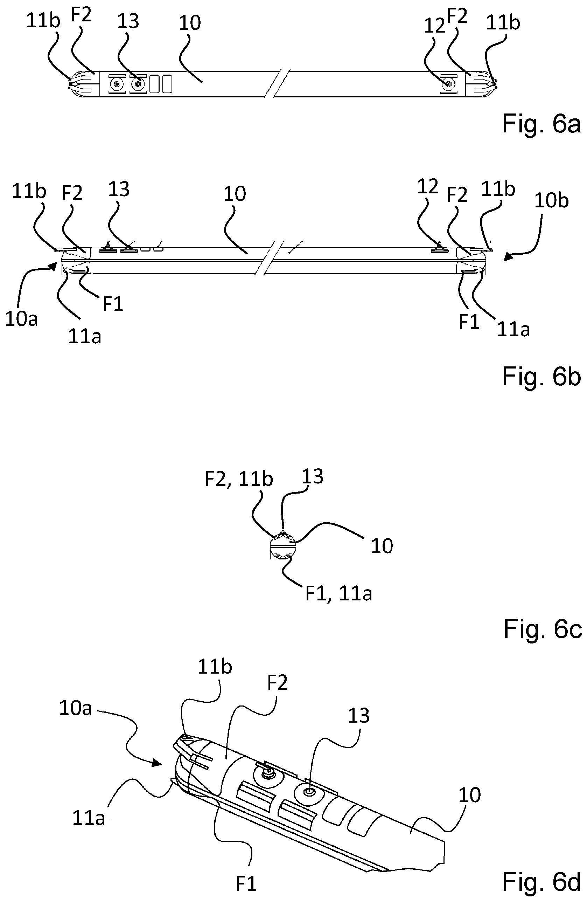

Figur 6a-6d zeigen verschiedene schematische Ansichten einer beispielhaften Ausführungsform eines aufblasbaren Störkörpers 10 einer Scruton-Wendel 1. Der Aufbau der in den Figuren 6a-6d gezeigten Ausführungsform eines aufblasbaren Störkörpers 10 entspricht im Wesentlichen dem Aufbau der aufblasbaren Störkörper der in Figur 5 gezeigten Ausführungsform einer Scruton-Wendeln. Im Unterschied zu den aufblasbaren Störkörpern der in Figur 5 gezeigten Ausführungsform weisen die in den Figuren 6a-6d gezeigten aufblasbaren Störkörper 10 eine Verbindungsvorrichtung 11 mit einer ersten Verbindungseinheit 11a mit einer ersten Verbindungseinheiten-Länge und eine von der ersten Verbindungseinheit 11a separaten zweiten Verbindungseinheit 11b mit einer zweiten Verbindungseinheiten-Länge auf. Die erste Verbindungseinheit 11a und die zweite Verbindungseinheit 11b sind als Verbindungslaschen ausgebildet, wobei die Verbindungslaschen der ersten Verbindungseinheit 11a im Vergleich zu den Verbindungslaschen der zweiten Verbindungseinheit 11b kürzer sind.

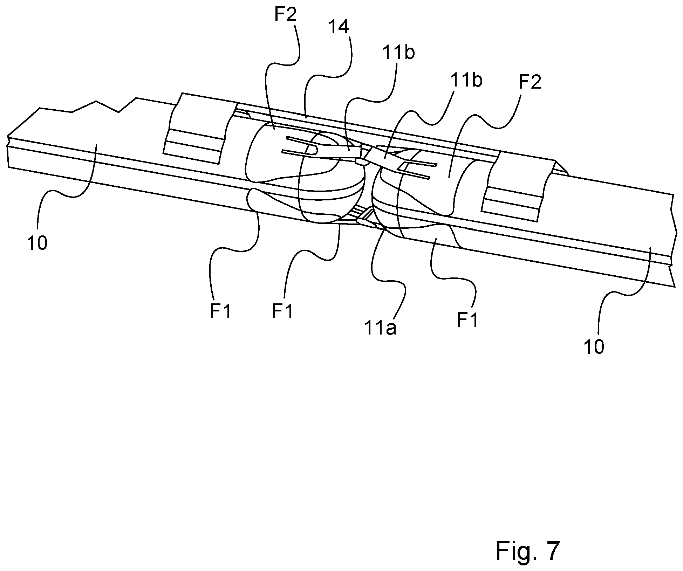

Figur 7 zeigt ausschnittsweise eine schematische dreidimensionale Ansicht einer weiteren beispielhaften Ausführungsform einer Scruton-Wendel mit aufblasbaren Störkörpern, wie dieser in den Figuren 6a-6d schematisch dargestellt ist. Es ist zu erkennen, dass die erste Verbindungseinheit 11a zwei Verbindungslaschen umfasst, wobei jeweils eine Verbindungslasche mit jeweils einem ersten Flächenabschnitt F1 des jeweiligen aufblasbaren Störkörpers verbunden ist. Die beiden Verbindungslaschen der ersten Verbindungseinheit sind über einen Softschäkel miteinander verbunden. Die zweite Verbindungseinheit 11b umfasst ebenfalls zwei Verbindungslaschen, wobei jeweils eine Verbindungslasche mit jeweils einem zweiten Flächenabschnitt F2 des jeweiligen aufblasbaren Störkörpers verbunden ist. Die beiden Verbindungslaschen der zweiten Verbindungseinheit 11b sind ebenfalls über einen Softschäkel miteinander verbunden.

Die erste Verbindungseinheiten-Länge ist hierbei kürzer als die zweite Verbindungseinheiten-Länge. Dies ermöglicht, dass die Scruton-Wendel im Betriebszustand derart an der Turmsektion angeordnet ist, dass die aufblasbaren Störkörper 10 zu der Turmsektion in solcher Weise ausgerichtet sind, dass die ersten Flächenabschnitte der Außenseite der Turmsektion zugewandt sind oder an der Außenseite der Turmsektion anliegen. Die gegenüberliegend zu dem ersten Flächenabschnitt ausgebildeten zweiten Flächenabschnitte sind im Betriebszustand hingegen von der Außenseite der Turmsektion abgewandt.

Die Lufteinlassöffnung 12 und die Luftauslassöffnung 13 sind auf der Seite der aufblasbaren Störkörper angeordnet, auf der sich die zweiten Flächenabschnitte befinden. Hierdurch wird sichergestellt, dass die Lufteinlassöffnung und die Luftauslassöffnung aufgrund der geringeren Erstreckung der ersten Verbindungseinheiten-Länge gegenüber der zweiten Verbindungseinheiten-Länge stets von der Außenseite der Turmsektion abgewandt sind. Entsprechend stehen die Lufteinlassöffnung und die Luftauslassöffnung im Betriebszustand nicht im Kontakt mit der Außenseite der Turmsektion. Insbesondere kommt es nicht zu einem Verschließen der Lufteinlassöffnung und der Luftauslassöffnung.

Ferner ist es hierdurch möglich, dass die benachbart angeordneten aufblasbaren Störkörper durch eine pneumatische Verbindungsleitung 14 miteinander gekoppelt werden können. Dies ermöglicht, die aufblasbaren Störkörper aufzublasen, indem über einen der aufblasbaren Störkörper der Scruton-Wendel Luft zugeführt wird.

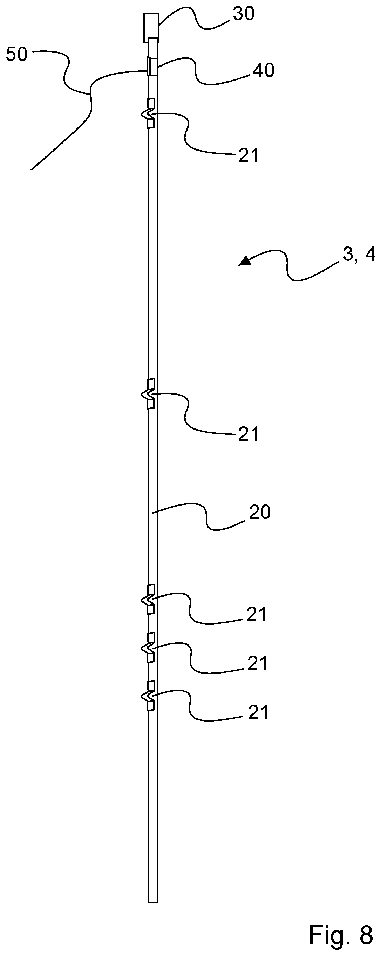

Figur 8 zeigt eine schematische Ansicht einer beispielhaften Ausführungsform einer Scruton-Wendel-Befestigungsvorrichtung, wie sie beispielsweise in dem in Figur 3 gezeigten Ausführungsbeispiel schematisch dargestellt ist. Die Scruton-Wendel 1 erstreckt sich zwischen einem oberen Wendelende 1a und einem unteren Wendelende 1b, die jeweils mit einer Scruton-Wendel-Befestigungsvorrichtung 3, 4 an der Turmsektion 2 befestigt sind.

Die Scruton-Wendel-Befestigungsvorrichtung 3, 4 umfasst eine Gurteinheit 20, die sich zwischen einem ersten Gurteinheitende und einem von dem ersten Gurteinheitende verschiedenen zweiten Gurteinheitende mit einer Gurtlänge entlang einer Gurtlängsachse erstreckt. Ferner erstreckt sich die Gurteinheit 20 zwischen einer Gurtinnenfläche und einer Gurtaußenfläche, wobei die Gurteinheit 20 zur Befestigung der einen oder der mehreren Scruton-Wendeln 1 an der Turmsektion 2 mit der Gurtinnenfläche an der Turmsektion 2 anliegt (siehe Figur 3).

An dem ersten Gurteinheitende weist die Scruton-Wendel-Befestigungsvorrichtung 3, 4 eine Ratsche als Schließmechanismus 30 auf. Der Schließmechanismus 30 dient der Befestigung der Gurteinheit 20 an der Turmsektion 2. Der Schließmechanismus 30 ist über einen Öffnungsmechanismus 40 mit der Gurteinheit 20 verbunden. Der Öffnungsmechanismus 40 dient zum Lösen der an der Turmsektion 2 befestigten Gurteinheit 20, wobei der Öffnungsmechanismus 40 zwischen einer Schließstellung und einer von der Schließstellung verschiedenen Entkopplungsstellung zum Lösen der an der Turmsektion 2 befestigten Gurteinheit 20 schaltbar ist. Hierzu ist der Öffnungsmechanismus 40 mit einer Betätigungseinheit 50 gekoppelt. Die Betätigungseinheit 50 umfasst in dem vorliegenden Ausführungsbeispiel ein Betätigungsseil 51, welches zum Lösen der Scruton-Wendel-Befestigungsvorrichtung 3, 4 und somit zur Demontage der Scruton-Wendelvorrichtung betätigt werden kann. Es kann bevorzugt sein, dass das Betätigungsseil in einem Aufrollmechanismus gelagert ist, der, nach Betätigung des Betätigungsseils und Lösen der Scruton-Wendel-Befestigungsvorrichtung 3, 4 automatisch von dem Aufrollmechanismus aufgerollt wird. Hierzu kann der Aufrollmechanismus an der jeweiligen Scruton-Wendel-Befestigungsvorrichtung 3, 4 befestigt sein.

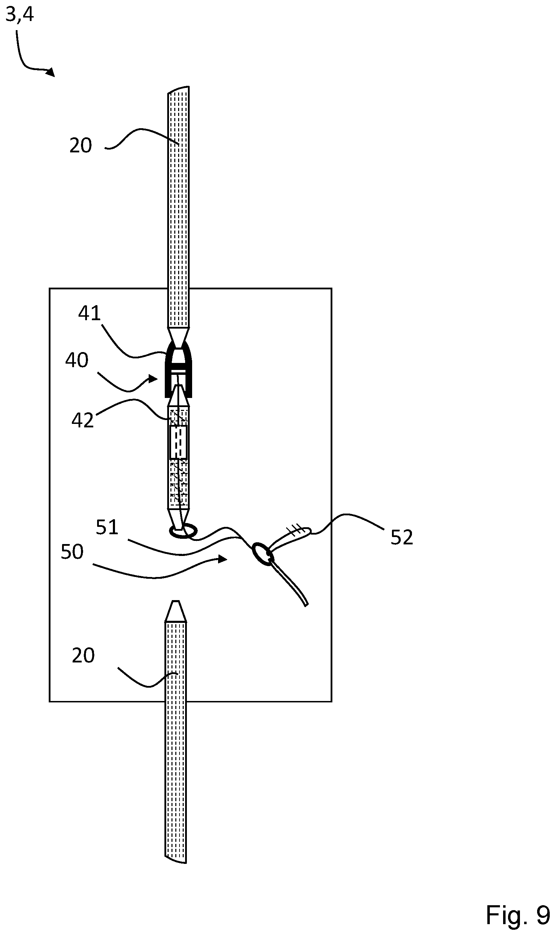

Vorzugsweise ist ein Schnappschäkel 41 vorgesehen, der den Öffnungsmechanismus 40 umfasst, der mit der Gurteinheit 20 über entsprechende Schlaufen gekoppelt ist. Dies ist in Figur 9 gezeigt, welche eine schematische Teilansicht der in Figur 8 gezeigten Scruton-Wendel-Befestigungsvorrichtung 3, 4 gemäß einer möglichen Ausführungsform zeigt. Es kann bevorzugt sein, wie dies schematisch in Figur 9 dargestellt ist, dass die Betätigungseinheit 50 durch eine Sicherungsvorrichtung in einem Sicherungszustand mit der Gurteinheit 20 gekoppelt ist und in einem von dem Sicherungszustand verschiedenen Entriegelungszustand nicht durch die Sicherungsvorrichtung mit der Gurteinheit gekoppelt ist. In der in Figur 9 schematisch dargestellten Teilansicht ist die Sicherungsvorrichtung in dem Sicherungszustand mit der Gurteinheit 20 gekoppelt. In dem vorliegenden Ausführungsbeispiel ist die Sicherungsvorrichtung ein Kabelbinder.

Vorzugsweise kann der Schnappschäkel 41 die Schließstellung und die von der Schließstellung verschiedene Entkopplungsstellung einnehmen. Es ist in bevorzugter Weise zu verstehen, dass in der Schließstellung die jeweilige Gurteinheit 20 im Betriebszustand die Turmsektion umschließt und in der Entkopplungsstellung die Verbindung der jeweiligen Gurteinheit zu der Turmsektion aufgehoben wird. Dies hat den Vorteil, dass der Schnappschäkel 41 durch den Öffnungsmechanismus aus der Ferne ausgelöst werden kann, etwa durch die entsprechende Betätigungseinheit 50.

Die Scruton-Wendel-Befestigungsvorrichtung umfasst Befestigungsanschlüsse 21 zur Befestigung einer Scruton-Wendel 1. Die Befestigungsanschlüsse 21 sind an der

Gurteinheit 20 ausgebildet. Insbesondere sind die Befestigungsanschlüsse 21 als Befestigungsschlaufen ausgebildet und an der Gurtaußenfläche befestigt.

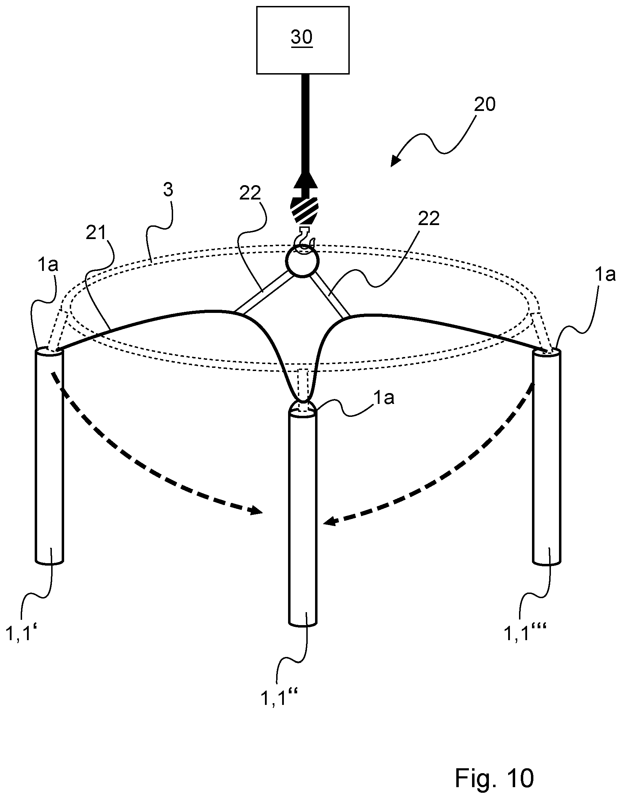

Figur 10 zeigt eine schematische Ansicht eines Ausführungsbeispiels eines Demontagegehänges 20. Das Demontagegehänge 20 weist einen Scruton-Wendel-Verbindungsgurt 21, der über Schäkel (nicht dargestellt) mit den Scruton-Wendeln 1, 1', 1", 1‴, insbesondere mit den oberen Wendelenden 1a der jeweiligen Scruton-Wendel für Demontagezwecke verbunden sein kann. Ferner weist das Demontagegehänge 20 zwei Hebegurte 22 auf, welche jeweils mit dem Scruton-Wendel-Verbindungsgurt 21 verbunden sind. Für die Demontage der Scruton-Wendeln 1, 1', 1", 1‴ kann das Demontagegehänge 20 über die Hebegurte 22 mit einem Kran 30 verbunden werden, wie dies schematisch in Figur 6 dargestellt ist.

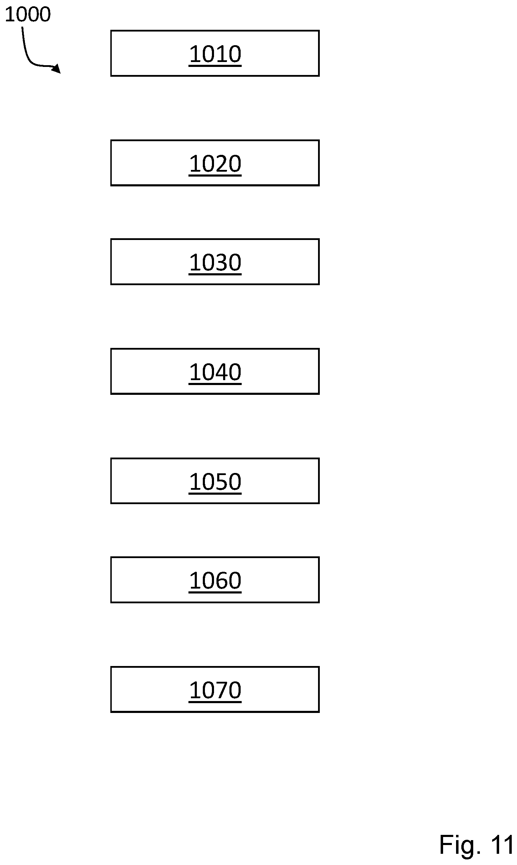

Figur 11 zeigt ein schematisches Blockdiagramm eines Ausführungsbeispiels eines Montageverfahrens 1000. Das Montageverfahren 1000 ist ein Montageverfahren 1000 zur Montage dreier aufblasbarer Scruton-Wendeln 1, 1', 1", 1‴ an einer Turmsektion 2 für einen Turm 102 für eine Windenergieanlage 100. Das Montageergebnis ist schematisch in Figur 3 dargestellt.

Das Verfahren 1000 umfasst ein Befestigen 1010 eines oberen Befestigungsgurtes 3 und ein Befestigen 1020 eines unteren Befestigungsgurtes 4 an der Turmsektion. Die Befestigung des oberen und unteren Befestigungsgurtes erfolgt entsprechend der Windungszahl. Insbesondere sind der obere und untere Befestigungsgurt je nach Windungszahl verdreht zueinander an der Turmsektion zu befestigen. Beispielsweise sind der obere und untere Befestigungsgurt bei einer Windungszahl von 1,5 um 180° verdreht zueinander an der Turmsektion zu befestigen. Das Befestigen 1010 des oberen Befestigungsgurtes 3 erfolgt an dem oberen Turmsektionsende 2a oder im Bereich des oberen Turmsektionsendes 2a, so dass der obere Befestigungsgurt 3 die Turmsektion 2 quer zur Längsachse L in Umfangsrichtung umschließt, wie dies schematisch Figur 3 zeigt. Das Befestigen 1020 des unteren Befestigungsgurtes 4 erfolgt an dem unteren Turmsektionsende 2b oder im Bereich des unteren Turmsektionsendes 2b, so dass der untere Befestigungsgurt 4 die Turmsektion 2 quer zur Längsachse L in Umfangsrichtung umschließt, wie dies schematisch Figur 3 zeigt.

Ferner umfasst das Verfahren 1000 ein Befestigen 1030 der drei aufblasbaren Scruton-Wendeln 1, 1', 1", 1‴ an dem oberen Befestigungsgurt 3 und dem unteren Befestigungsgurt 4, so dass das jeweilige obere Wendelende mit dem oberen Befestigungsgurt 3 verbunden ist und das jeweilige untere Wendelende 1b mit dem unteren Befestigungsgurt 4 verbunden ist, so dass die mehreren Scruton-Wendeln 1, 1', 1", 1‴ die Turmsektion 2 spiralförmig umschließen, wobei die aufblasbaren Störkörper der mehreren Scruton-Wendeln 1, 1', 1", 1‴ nicht aufgeblasen sind. D.h. die Scruton-Wendeln 1, 1', 1", 1‴ werden an dem oberen Befestigungsgurt 3 und dem unteren Befestigungsgurt 4 befestigt, wenn sie sich im Leerzustand befinden, d.h. in einem Zustand befinden in dem die aufblasbaren Störkörper 10 nicht mit Luft oder einem anderen Gas(gemisch) aufgeblasen sind. In diesem Zustand weisen die aufblasbaren Störkörper 10 als Störkörperhohlraumvolumen ein Leerzustandsvolumen auf.

Nachdem die Scruton-Wendeln 1, 1', 1", 1‴ an dem oberen Befestigungsgurt 3 und dem unteren Befestigungsgurt 4 befestigt sind, folgt in einem nächsten Schritt ein Aufblasen 1040 der aufblasbaren Störkörper 10 der mehreren Scruton-Wendeln 1, 1', 1", 1‴. Sobald die aufblasbaren Störkörper 10 aufgeblasen sind, in dem die aufblasbaren Störkörper mit Luft oder einem anderen Gas(gemisch) aufgeblasen sind, d.h. sich in einem aufgeblasenen Zustand befinden weisen sie als Störkörperhohlraumvolumen ein Füllvolumen auf, welches größer ist als das Leerzustandsvolumen.

Anschließend wird die Turmsektion zusammen mit den daran befestigten Scruton-Wendeln 1, 1', 1", 1‴ aus einer Montageposition angehoben 1050 und in einer Betriebsposition positioniert 1060. In dieser Betriebsposition wird die Turmsektion befestigt, beispielsweise auf einer anderen, bereits montierten Turmsektion.

Insbesondere kann es bevorzugt sein, Scruton-Wendeln 1, 1', 1", 1‴ von übereinander angeordneten bzw. übereinander anzuordnenden Turmsektionen 2 zu verbinden bzw. dass Scruton-Wendeln 1, 1', 1", 1‴ von übereinander angeordneten bzw. übereinander anzuordnenden Turmsektionen 2 verbunden sind. Entsprechend kann eine Scruton-Wendel-Kopplungsvorrichtung vorgesehen werden, welche jeweils eine Scruton-Wendel 1 einer im Montagezustand unteren Turmsektion mit einer entsprechenden Scruton-Wendel einer im Montagezustand oberen Turmsektion verbindet. Insbesondere verbindet die Scruton-Wendel-Kopplungsvorrichtung ein oberes Scruton-Wendel-Ende 1a einer Scruton-Wendel 1 der unteren Turmsektion mit dem unteren Scruton-Wendel-Ende 1b einer Scruton-Wendel 1 der oberen Turmsektion 2.

Vorzugsweise werden die Scruton-Wendeln 1 einer unteren Turmsektion 2 mit den Scruton-Wendeln 1 einer oberen Turmsektion 2 verbunden, kurz bevor die obere Turmsektion 2 auf die untere Turmsektion 2 aufgesetzt und mit der unteren Turmsektion verbunden wird.

Vorzugsweise ist die Scruton-Wendel-Kopplungsvorrichtung mehrteilig ausgebildet. Insbesondere weist die Scruton-Wendel-Kopplungsvorrichtung eine erste Scruton-Wendel-Kopplungseinheit und eine zweite Scruton-Wendel-Kopplungseinheit auf, wobei die erste Scruton-Wendel-Kopplungseinheit mit dem oberen Scruton-Wendel-Ende 1a der Scruton-Wendel 1 der unteren Turmsektion 2 gekoppelt ist und die zweite Scruton-Wendel-Kopplungseinheit mit dem unteren Scruton-Wendel-Ende 1b der Scruton-Wendel 1 der oberen Turmsektion 2 gekoppelt ist. Vorzugsweise werden die erste Scruton-Wendel-Kopplungseinheit und die zweite Scruton-Wendel-Kopplungseinheit mit dem jeweiligen Scruton-Wendel-Ende gekoppelt, wenn die Turmsektion noch auf dem Boden gelagert wird bzw. bevor die jeweilige Turmsektion mit einem Kran angehoben wird.

Insbesondere ist es vorgesehen, dass die Kopplung der ersten und zweiten Scruton-Wendel-Kopplungseinheit durch einen Monteur erfolgt, der sich am oberen Ende der bereits montierten unteren Turmsektion 2 befindet. Somit kann die Kopplung aus dem bereits montierten Turmabschnitt erfolgen. Dies erfordert allerdings, dass die Scruton-Wendel-Kopplungsvorrichtung selbstspannend ist. Als Scruton-Wendel-Kopplungsvorrichtung kommt daher beispielsweise ein Expander-Seil oder aber ein Spanngurt in Betracht. Hierdurch ist sichergestellt, dass die Scruton-Wendel-Kopplungsvorrichtung nach der Befestigung der oberen Turmsektion 2 auf der unteren Turmsektion 2 an der Außenseite der montierten Turmsektionen 2 anliegt.

Derart verbundene Scruton-Wendeln 1 ermöglichen eine besonders effiziente Montage. Denn es müssen lediglich die Scruton-Wendeln 1 der obersten Turmsektion 2 mit dem Demontagegehänge 20 verbunden werden und dann, beginnend bei dem unteren Befestigungsgurt 4 an der untersten Turmsektion 2, die unteren und oberen Befestigungsgurte 3, 4 von unten nach oben durch Betätigung der Betätigungseinheit 50 gelöst werden, so dass die sich die in vertikaler Richtung verbundenen Scruton-Wendeln 1 von dem Turm 102 abrollen.

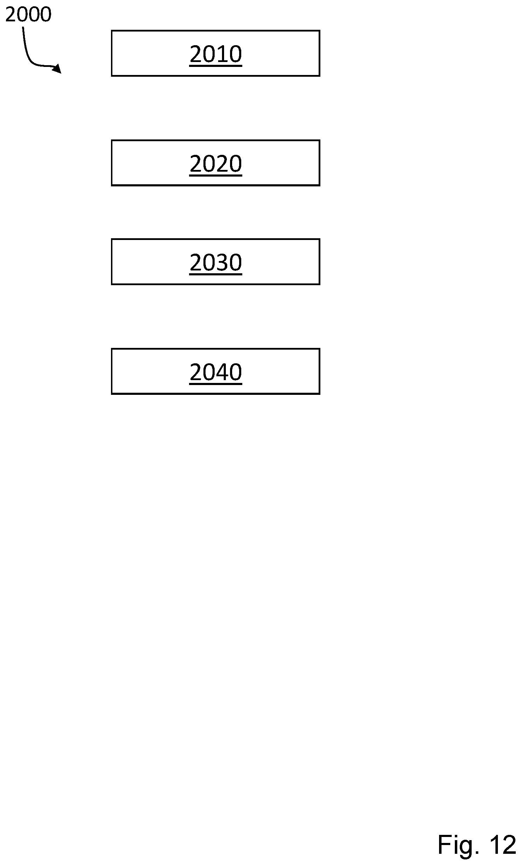

Figur 12 zeigt ein schematisches Blockdiagramm eines Ausführungsbeispiels eines Demontageverfahrens 2000. Das Demontageverfahren 2000 ist ein Demontageverfahren 2000 zur Demontage mehrerer an einer Turmsektion 2 für einen Turm 102 für eine Windenergieanlage 100 spiralförmig angeordneter, aufgeblasener Scruton-Wendeln 1.

Beispielsweise einer Turmsektion 2 mit drei daran befestigten Scruton-Wendeln, wie dies schematisch in dem in Figur 3 gezeigten Ausführungsbeispiel dargestellt ist.

Das Demontageverfahren umfasst zunächst ein Lösen 2010 der Befestigung der mehreren aufgeblasenen Scruton-Wendeln 1, 1', 1", 1‴ von dem unteren Turmsektionsende 2b oder von der Turmsektion 2 im Bereich des unteren Turmsektionsendes 2b. Dies umfasst ein Lösen des unteren Befestigungsgurtes 4 von dem unteren Turmsektionsende 2b der Turmsektion 2. Hierbei sind die aufblasbaren Störkörper 10 nach wie vor aufgeblasen. Durch das Lösen bewirkt die Spannkraft, mit der die aufblasbaren Störkörper 10 im Zusammenspiel mit dem oberen und unteren Befestigungsgurt 3, 4 an die Turmsektion gespannt werden, ein Abwickeln 2020, insbesondere selbstständiges Abwickeln, der mehreren aufgeblasenen Scruton-Wendeln 1, 1', 1", 1‴ von der Turmsektion 2. Dies hat insbesondere den Vorteil, dass die Scruton-Wendeln nicht mit technischen Hilfsmitteln von der Turmsektion abgewickelt werden müssen. Anschließend, nach dem Abwickeln, folgt ein Lösen 2030 der Befestigung der mehreren Scruton-Wendeln 1, 1', 1", 1‴ von dem oberen Turmsektionsende 2a oder von der Turmsektion 2 im Bereich des oberen Turmsektionsendes 2a. Dies umfasst ein Lösen des oberen Befestigungsgurtes 3 von dem oberen Turmsektionsende 2a der Turmsektion 2. Sobald der obere Befestigungsgurt 3 gelöst wurde, werden die Scruton-Wendeln zu Boden gelassen. Entsprechend wird vor dem Lösen 2030 der Befestigung der drei Scruton-Wendeln 1, 1', 1", 1‴ von dem oberen Turmsektionsende 2a, die Scruton-Wendeln mit einem Kran 30 über ein Demontagegehänge 20 zu Boden zu lassen.

Abschließend werden die aufgeblasenen Störkörper entleert 2040.

### BEZUGSZEICHENLISTE

- 1: Scruton-Wendel
- 1a: oberes Wendelende
- 1b: unteres Wendelende
- 2: Turmsektion
- 2a: oberes Turmsektionsende
- 2b: unteres Turmsektionsende
- 3: oberer Befestigungsgurt
- 4: unterer Befestigungsgurt
- 10: Störkörper
- 10a: erstes Störkörperende
- 10b: zweites Störkörperende
- 11: Verbindungsvorrichtung
- 11a: erste Verbindungseinheit
- 11b: zweite Verbindungseinheit
- 12: Lufteinlassöffnung
- 13: Luftauslassöffnung
- 14: pneumatische Verbindungsleitung
- 20: Gurteinheit
- 30: Schließmechanismus
- 40: Öffnungsmechanismus
- 50: Betätigungseinheit
- 51: Betätigungsseil
- 52: Sicherungsvorrichtung
- 100: Windenergieanlage
- 102: Turm
- F1: erster Flächenabschnitt
- F2: zweiter Flächenabschnitt
- L: Längsachse

## Patentansprüche

1. Scruton-Wendel (1) zur spiralförmigen Montage an einer Turmsektion (2) für einen Turm (102), insbesondere an einer Turmsektion (2) für einen Turm (102) für eine Windenergieanlage (100), umfassend:
- mehrere aufblasbare Störkörper (10), die sich jeweils zwischen einem ersten Störkörperende (10a) und einem von dem ersten Störkörperende (10a) verschiedenen zweiten Störkörperende (10b) mit einer Störkörperlänge entlang einer Störkörperlängsachse erstrecken,
**dadurch gekennzeichnet, dass**
- die aufblasbaren Störkörper (10) in einer Reihe angeordnet sind und benachbart angeordnete Störkörper über eine Verbindungsvorrichtung (11) miteinander verbunden sind.

2. Scruton-Wendel (1) nach dem vorhergehenden Anspruch 1, wobei die Verbindungsvorrichtung (11) eine erste Verbindungseinheit (11a) mit einer ersten Verbindungseinheiten-Länge und eine von der ersten Verbindungseinheit (11a) separate zweite Verbindungseinheit (11b) mit einer zweiten Verbindungseinheiten-Länge aufweist.

3. Scruton-Wendel (1) nach dem vorhergehenden Anspruch 2, wobei
- die erste Verbindungseinheiten-Länge kleiner ist als die zweite Verbindungseinheiten-Länge oder
- die erste Verbindungseinheiten-Länge der zweiten Verbindungseinheiten-Länge entspricht.

4. Scruton-Wendel (1) nach einem der vorhergehenden Ansprüche 2 oder 3, wobei
- die erste Verbindungseinheit (11a) mit einem ersten Flächenabschnitt (F1) der jeweiligen aufblasbaren Störkörper (10) verbunden ist, und
- die zweite Verbindungseinheit (11b) mit einem zweiten Flächenabschnitt (F2) der aufblasbaren Störkörper (10) verbunden ist, wobei sich der zweite Flächenabschnitt (F2) vorzugsweise gegenüberliegend zum ersten Flächenabschnitt (F1) erstreckt.

5. Scruton-Wendel (1) nach einem der vorhergehenden Ansprüche 2 bis 4, umfassend eine Lufteinlassöffnung (12) und/oder eine Luftauslassöffnung (13), wobei die Lufteinlassöffnung (12) und/oder die Luftauslassöffnung (13) vorzugsweise ein Rückschlagventil aufweisen.

6. Scruton-Wendel (1) nach dem vorhergehenden Anspruch 5, wobei die Lufteinlassöffnung (12) und/oder die Luftauslassöffnung (13)
- an einem dritten Flächenabschnitt der jeweiligen aufblasbaren Störkörper (10) ausgebildet sind, der in Umfangsrichtung der jeweiligen aufblasbaren Störkörper (10) zwischen dem ersten Flächenabschnitt (F1) und dem zweiten Flächenabschnitt (F2) angeordnet ist, oder
- an dem zweiten Flächenabschnitt (F2) oder an einem vierten Flächenabschnitt der jeweiligen aufblasbaren Störkörper, der sich gegenüberliegend zum ersten Flächenabschnitt erstreckt, ausgebildet sind.

7. Scruton-Wendel (1) nach einem der vorhergehenden Ansprüche 5 oder 6, umfassend eine pneumatische Verbindungsleitung (14), welche die Luftauslassöffnung (13) eines aufblasbaren Störkörpers (10) mit der Lufteinlassöffnung (12) des in Reihe benachbart angeordneten und mit der Verbindungsvorrichtung (11) verbundenen aufblasbaren Störkörpers (10) strömungstechnisch verbindet.

8. Scruton-Wendel (1) nach einem der vorhergehenden Ansprüche 5 bis 7, wobei die Lufteinlassöffnung (12) an dem oder in dem Bereich des zweiten Störkörperendes (10b) angeordnet ist und/oder die Luftauslassöffnung (13) an dem oder in dem Bereich des ersten Störkörperendes (10a) angeordnet ist.

9. Scruton-Wendel-Befestigungsvorrichtung (3, 4) zur Befestigung einer oder mehrerer Scruton-Wendel/n (1, 1', 1", 1‴) an einer Turmsektion (2) für einen Turm (102), insbesondere an einer Turmsektion (2) für einen Turm (102) für eine Windenergieanlage (100), umfassend
- eine Gurteinheit (20), die sich zwischen einem ersten Gurteinheitende und einem von dem ersten Gurteinheitende verschiedenen zweiten Gurteinheitende mit einer Gurtlänge entlang einer Gurtlängsachse erstreckt und zwischen einer Gurtinnenfläche und einer Gurtaußenfläche erstreckt, wobei die Gurteinheit zur Befestigung der einen oder der mehreren Scruton-Wendeln (1, 1', 1", 1‴) an der Turmsektion (2) mit der Gurtinnenfläche an der Turmsektion (2) anliegt,
- einen Schließmechanismus (30) zum Befestigen der Gurteinheit (20) an der Turmsektion (2), wobei der Schließmechanismus (30) mit der Gurteinheit verbunden ist,
**dadurch gekennzeichnet, dass**
- der Schließmechanismus (30) eine Ratsche ist.

10. Scruton-Wendel-Befestigungsvorrichtung (3, 4) nach dem vorhergehenden Anspruch 9, wobei der Schließmechanismus (30) mit der Gurteinheit (20) an dem ersten Gurteinheitende oder im Bereich des ersten Gurteinheitendes verbunden ist.

11. Scruton-Wendel-Befestigungsvorrichtung (3, 4) nach einem der vorhergehenden Ansprüche 9 oder 10, aufweisend einen Öffnungsmechanismus (40) zum Lösen der an der Turmsektion (2) befestigten Gurteinheit (20), wobei vorzugsweise der Schließmechanismus (30) über den Öffnungsmechanismus (40) mit der Gurteinheit (20) verbunden ist, wobei der Öffnungsmechanismus (40) zwischen einer Schließstellung und einer von der Schließstellung verschiedenen Entkopplungsstellung zum Lösen der an der Turmsektion (2) befestigten Gurteinheit (20) schaltbar ist.

12. Scruton-Wendel-Befestigungsvorrichtung (3, 4) nach einem der vorhergehenden Ansprüche 9 bis 11, aufweisend eine Betätigungseinheit (50), die mit dem Öffnungsmechanismus (40) gekoppelt ist.

13. Scruton-Wendel-Befestigungsvorrichtung (3, 4) nach einem der vorhergehenden Ansprüche 9 bis 12, wobei die Betätigungseinheit (50) ein Betätigungsseil (51) und/oder einen Betätigungsgurt umfasst oder ist.

14. Scruton-Wendel-Befestigungsvorrichtung (3, 4) nach einem der vorhergehenden Ansprüche 9 bis 13, aufweisend eine Sicherungsvorrichtung (52), wobei die Betätigungseinheit durch die Sicherungsvorrichtung in einem Sicherungszustand mit der Gurteinheit (20) gekoppelt ist und in einem von dem Sicherungszustand verschiedenen Entriegelungszustand nicht durch die Sicherungsvorrichtung mit der Gurteinheit gekoppelt ist.

15. Scruton-Wendel-Befestigungsvorrichtung (3, 4) nach einem der vorhergehenden Ansprüche 9 bis 14, wobei
- die Sicherungsvorrichtung (52) ein Kabelbinder ist, und/oder
- die Sicherungsvorrichtung ein Sicherungselement mit einer Sollbruchstelle und/oder einer Solltrennstelle ist.

16. Scruton-Wendel-Befestigungsvorrichtung (3, 4) nach einem der vorhergehenden Ansprüche 9 bis 15, aufweisend mehrere an der Gurteinheit (20) ausgebildete Befestigungsanschlüsse zur Befestigung einer Scruton-Wendel, insbesondere zur Befestigung einer aufblasbaren Scruton-Wendel (1, 1', 1", 1‴) nach einem der vorhergehenden Ansprüche 1 bis 8.

17. Scruton-Wendelvorrichtung umfassend
- mehrere, vorzugsweise drei, Scruton-Wendeln (1, 1', 1", 1‴) nach einem der vorhergehenden Ansprüche 1 bis 8, und
- mehrere Scruton-Wendel-Befestigungsvorrichtungen (3, 4) nach einem der vorhergehenden Ansprüche 9 bis 16.

18. Turmsektion (2) für einen Turm (102), insbesondere für einen Turm (102) für eine Windenergieanlage (100), die sich entlang einer Längsachse (L) zwischen einem oberen Turmsektionsende (2a) und einem von dem oberen Turmsektionsende (2a) verschiedenen unteren Turmsektionsende (2b) erstreckt, umfassend mindestens eine Scruton-Wendelvorrichtung nach dem vorhergehenden Anspruch 17, die sich zwischen einem oberen Wendelende (1a) und einem unteren Wendelende (1b) spiralförmig zwischen dem oberen Turmsektionsende (2a) und dem unteren Turmsektionsende (2b) erstreckt.

19. Turm (102), insbesondere Turm (102) für eine Windenergieanlage (100), umfassend eine Turmsektion (2) nach dem vorhergehenden Anspruch 18.

20. Windenergieanlage (100) umfassend eine Turmsektion (2) nach dem vorhergehenden Anspruch 18, und/oder einen Turm (102) nach dem vorhergehenden Anspruch 19.

21. Verwendung einer Scruton-Wendel (1) nach einem der vorhergehenden Ansprüche 1 bis 8 als Scruton-Wendel (1) an einem zylinderförmigen Bauwerk, insbesondere an einem Turm (102) oder einer Turmsektion (2), einem Schornstein, einem Antennenmast, einem Stützpfeiler einer Brücke oder einem Halteseil einer Hängebrücke, besonders bevorzugt an einem Turm (102) oder einer Turmsektion (2) einer Windenergieanlage (100).

22. Verwendung einer Scruton-Wendel-Befestigungsvorrichtung (3, 4) zur Befestigung einer Scruton-Wendel (1), insbesondere einer Scruton-Wendel (1) nach einem der vorhergehenden Ansprüche 1 bis 8, als Scruton-Wendel (1) an einem zylinderförmigen Bauwerk, insbesondere an einem Turm (102) oder einer Turmsektion (2), einem Schornstein, einem Antennenmast, einem Stützpfeiler einer Brücke oder einem Halteseil einer Hängebrücke, besonders bevorzugt an einem Turm (102) oder einer Turmsektion (2) einer Windenergieanlage (100).
